# EUROPÄISCHE PATENTSCHRIFT

(11) **EP 3 380 417 B1**
(45) Veröffentlichungstag und Bekanntmachung des Hinweises auf die Patenterteilung: **19.08.2020**
(21) Anmeldenummer: 16805270.2
(22) Anmeldetag: 23.11.2016
(51) Int. Cl.: B65G 19/02, B65G 47/61

(54) **VORRICHTUNG ZUM BESCHICKEN VON TRANSPORTTASCHEN**
APPARATUS FOR LOADING TRANSPORT POUCHES
DISPOSITIF DE CHARGEMENT DE SACS DE TRANSPORT

(30) Priorität: 25.11.2015 CH 17212015; 27.10.2016 CH 14382016
(43) Veröffentlichungstag der Anmeldung: 03.10.2018
(73) Patentinhaber: Ferag AG, 8340 Hinwil (CH)
(72) Erfinder: SIGRIST, Sergio, 8340 Hinwil (CH)
(74) Vertreter: Frei Patent Attorneys
(86) Internationale Anmeldenummer: PCT/CH2016/000148
(87) Internationale Veröffentlichungsnummer: WO 2017/088078

(56) Entgegenhaltungen:
- EP-A1- 0 638 501
- WO-A2-90/03853
- DE-A1-102004 018 569
- DE-A1-102008 061 685
- DE-A1-102012 018 925

## Beschreibung

Die Erfindung liegt auf dem Gebiet der Transport- und Fördertechnik, insbesondere der Intra-Logistik. Die Erfindung betrifft eine Hängefördereinrichtung nach dem Oberbegriff des Anspruchs 1.

In automatisierten Warenlagern, weitläufigen Produktionsstätten und beim Warentransport ganz allgemein besteht der Bedarf, Güter in geeignete Behältnisse aufzunehmen, diese dann zum Beispiel über eine Hängefördereinrichtung weiter zu fördern und Zwischenspeichern oder zu ihrem Bestimmungsort zu transportieren und dort wieder zu entladen.

So ist es aus dem Stand der Technik bekannt, für den Transport der Güter Hängefördereinrichtungen mit Transporttaschen einzusetzen.

Die Publikationsschrift DE 10 2004 018 569 A1 beschreibt beispielsweise einen Hängeförderer mit einer Mehrzahl von zusammenklappbaren Sammeltaschen zum Aufnehmen und sortierenden Sammeln von Objekten, insbesondere von Kleidungsstücken. Die Sammeltasche umfasst ein Rahmengestell und einen am Rahmengestell hängenden Taschenbeutel. Die Fördertasche ist über einen am Rahmengestell angebrachten Haken am Hängeförderer aufgehängt.

Der Vorteil von Transporttaschen liegt darin, dass diese flexibel ausgebildet sind. Dadurch lässt sich das Aufnahmefach, d.h. der Taschenbeutel, komprimieren bzw. zusammendrücken, z. B. durch Zusammenfalten. Die Transporttaschen erlauben auf diese Weise gegenüber beispielsweise starren Kisten eine platzsparende Güterlogistik. So lassen sich leere Transporttaschen mit zusammengedrücktem Aufnahmefach, d.h. Taschenbeutel, platzsparend lagern oder fördern. Die Aufnahmefächer brauchen erst für den Gütertransport oder die Güterlagerung raumeinnehmend expandiert zu werden.

Hängefördersysteme mit Transporttaschen weisen allerdings den Nachteil auf, dass es schwierig ist, die Transporttaschen in einem automatisierten Prozess zuverlässig mit Gütern zu beschicken. Dies liegt unter anderem daran, dass die Taschenöffnung bzw. Aufnahmeöffnung nur eine begrenzte Grösse aufweist, durch welche das Transportgut zielgerichtet in das Aufnahmefach eingeführt werden muss. Zudem werden die Transporttaschen in Hängefördersystemen in der Regel frei schwingend bzw. schwenkend gefördert, was den Transfer von Gütern in die Transporttaschen ebenfalls erschwert. D.h., es sind zusätzliche Massnahmen zur Stabilisierung der Transporttaschen notwendig.

Die Publikationsschrift DE 10 2008 061 685 A1 beschreibt eine Hängefördereinrichtung nach dem Oberbegriff des Anspruchs 1 mit einer Belade-Station für geförderte Transporttaschen. Die Belade-Station weist eine obere Zuführ-Schiene für die Transporttaschen, einen sich an die Zuführ-Schiene anschliessenden Senkrecht-Förderer zum Zuführen der Transporttaschen in eine untere Belade-Position, eine Einrichtung zum Öffnen der Transporttaschen in der Belade-Position und eine sich an den Senkrecht-Förderer anschliessende untere Abführ-Schiene zum Abführen der Transporttaschen aus der Belade-Position auf. Bekannte Belade-Stationen bzw. die dazugehörigen Transporttaschen weisen den Nachteil auf, dass diese aus oben genannten Gründen häufig einen aufwändigen Aufbau und die Belade-Stationen einen komplexen Prozessablauf aufweisen. Der Belade-Vorgang ist entsprechend umständlich. Dies hat zur Folge, dass die Beladegeschwindigkeit unbefriedigend ist.

Es ist daher eine Aufgabe, eine Vorrichtung zum Beschicken von Transporttaschen mit einem Transportgut vorzuschlagen, welche möglichst ohne Zusatzeinrichtungen auskommt.

Ferner soll die Vorrichtung ein zuverlässiges Beschicken der Transporttaschen, insbesondere auch bei vergleichsweise kleinen Aufnahmeöffnungen erlauben.

Ferner soll die Vorrichtung ein Beschicken der Transporttaschen mit vergleichsweise hoher Geschwindigkeit erlauben.

Es ist ferner auch eine Aufgabe, eine Transporttasche sowie eine Hängefördereinrichtung mit dem dazugehörigen Verfahren vorzuschlagen, welche ein einfaches Öffnen der Transporttaschen zwecks Beschicken der Transporttaschen mit einem Transportgut erlauben. Der Aufbau der Transporttasche soll dabei möglichst einfach sein.

Die Erfindung wird durch die Hängefördervorrichtung nach Anspruch 1 und durch das Verfahren nach Anspruch 11 definiert. Die abhängigen Ansprüche, die Beschreibung und die Figuren beinhalten besondere Ausführungsformen und Weiterbildungen der Erfindung.

Die Vorrichtung zeichnet sich nun unter anderem dadurch aus, dass das mindestens eine Steuerelement an der Beutelwand der Transporttasche angeordnet ist.

Ein weiterer Aspekt betrifft ferner eine Vorrichtung zum Beschicken von Transporttaschen mit einem Transportgut. Die Vorrichtung enthält eine Zufördereinrichtung zum Zufördern des Transportguts in eine Transferzone sowie eine Hängefördereinrichtung mit einer Mehrzahl von in Förderrichtung hintereinander angeordneten Transporttaschen zur Übernahme des Transportguts in der Transferzone und zum Wegfördern der beschickten Transporttaschen.

Die Transporttaschen bilden jeweils ein Aufnahmefach für das Transportgut sowie eine Taschenrückwand aus und sind an einem Förderorgan der Hängefördereinrichtung befestigt bzw. mit diesem verbunden.

Zu diesem Aspekt zählt auch ein Verfahren zum Beschicken von Transporttaschen mit einem Transportgut, mittels der genannten Vorrichtung, wobei das Transportgut mittels der Zufördereinrichtung der Transferzone zugefördert und in die Aufnahmefächer der von der Hängefördereinrichtung der Transferzone zugeförderten Transporttaschen transferiert wird.

Gemäss diesem Aspekt sind die Zufördereinrichtung und die Hängefördereinrichtung derart ausgebildet und relativ zueinander angeordnet, dass die Transporttaschen in einer liegenden Formation und in einer Transfer-Förderrichtung durch die Transferzone bewegt werden und das Transportgut mittels der Zufördereinrichtung im Wesentlichen in der Transfer-Förderrichtung, insbesondere in der Transfer-Förderrichtung, der Transporttaschen in die Transferzone gefördert und in einem Abgabebereich von oben, insbesondere mittels Schwerkraftunterstützung, an die in der Transferzone unterhalb der Zufördereinrichtung durch die Transferzone bewegten Transporttaschen abgegeben wird.

Im Wesentlichen in der Transfer-Förderrichtung bedeutet insbesondere, dass die beiden Förderrichtungen zueinander einen Winkel von weniger als 45° (Winkelgrade), insbesondere von weniger als 20° einschliessen.

Gemäss einer Weiterbildung der Transporttasche bildet die Taschenrückwand in der Offenstellung der Transporttasche einen über das Aufnahmefach hinaus verlängerten Rückwandabschnitt aus.

Der verlängerte Rückwandabschnitt bildet in der Transferzone insbesondere eine Auflagefläche für das übergebene und in das Aufnahmefach der Transporttasche aufzunehmende Transportgut aus.

Das Aufnahmefach bildet eine Aufnahmeöffnung für das Transportgut aus.

Der Rückwandabschnitt ist insbesondere in der Offenstellung der Transporttasche über die Aufnahmeöffnung hinaus verlängert.

Die Transporttasche enthält eine Beutelwand, welche zusammen mit der Taschenrückwand das Aufnahmefach für das Transportgut ausbildet. Die Beutelwand ist insbesondere mit der Taschenrückwand verbunden.

Die Beutelwand bildet in der Transferzone insbesondere eine Auflagefläche für das in das Aufnahmefach einer nachfolgenden Transporttasche aufzunehmende Transportgut aus.

Die Transporttaschen sind jeweils über ein Befestigungsmittel mit dem Förderorgan der Hängefördereinrichtung verbunden.

Die Hängefördereinrichtung bildet in der Transferzone insbesondere eine Taschenauflage aus, auf welcher die Transporttaschen in der Transferzone aufliegen. Die Transporttaschen liegen insbesondere derart der Taschenauflage auf, dass die Transporttaschen und insbesondere deren verlängerter Rückwandabschnitt bzw. die Beutelwand eine Auflagefläche für das vom Aufnahmefach der Transporttasche aufzunehmende Transportgut ausbildet.

Die Transferzone definiert jene Förderzone in der Vorrichtung, in welcher die Transportgüter von der Zufördereinrichtung an die Hängefördereinrichtung transferiert, d.h. abgeben bzw. übergeben werden.

Die Taschenrückwand mit dem verlängerten Rückwandabschnitt weist eine der Aufnahmeöffnung bzw. dem Aufnahmefach zugewandte Vorderseite und eine der Vorderseite gegenüber liegende und insbesondere der Taschenauflage zugewandte Rückseite auf.

Die Vorderseite ist in der Transferzone bezüglich Schwerkraftrichtung insbesondere nach oben weisend und die Rückseite nach unten weisend angeordnet.

Das Aufnahmefach ist auf der Vorderseite der Taschenrückwand angeordnet. Entsprechend wird das Aufnahmefach zur Rückseite hin durch die Taschenrückwand begrenzt. Auf der Vorderseite wird das Aufnahmefach durch die zusammendrückbare Beutelwand begrenzt.

Die Beutelwand kann zusammen mit der Taschenrückwand ein lediglich durch die Aufnahmeöffnung nach aussen offenes Aufnahmefach ausbilden. Die Beutelwand kann zusammen mit der Taschenrückwand allerdings auch ein zur Seite hin offenes Aufnahmefach ausbilden, wie dies beispielsweise in der DE 10 2008 061 685 A1 gezeigt ist.

Der verlängerten Rückwandabschnitt erstreckt sich insbesondere mindestens über die gesamte Breite des Aufnahmefachs.

Es ist allerdings auch möglich, dass die Transportasche keinen verlängerten Rückwandabschnitt ausbildet. So kann sich das Aufnahmefach auch über die gesamte Länge der Tasche erstrecken.

Der Begriff "liegend" bedeutet insbesondere, dass die Transporttaschen in der Transferzone horizontal ausgerichtet oder gegebenenfalls in Förderrichtung geneigt sind, derart, dass das übergebene Transportgut ausserhalb des Aufnahmefachs auf der Transporttasche, insbesondere auf dem verlängerten Rückwandabschnitt, zu liegen kommen kann.

Die oben erwähnte liegende Anordnung der Transporttasche bezieht sich insbesondere auf die Ausrichtung bzw. Neigung der Taschenrückwand in Förderrichtung, insbesondere des verlängerten Rückwandabschnittes, der Transporttasche.

Die Transporttaschen können in der liegenden Anordnung in der Transferzone gegenüber einer Horizontalen auch einen Neigungswinkel von kleiner 45°, insbesondere von kleiner 20° (Winkelgrade), und ganz besonders von kleiner 10° ausbilden.

Die Neigung des verlängerten Rückwandabschnitts ist insbesondere derart, dass der verlängerte Rückwandabschnitt von seinem freien Endabschnitt zur Aufnahmeöffnung hin ein Gefälle aufweist.

Gemäss einer besonderen Ausführungsvariante sind die Transporttaschen in der Transferzone horizontal ausgerichtet.

Das Aufnahmefach ist in der Transferzone in Förderrichtung betrachtet relativ zum verlängerten Rückwandabschnitt nachlaufend. Das Aufnahmefach ist im Weiteren in der Transferzone bezogen auf die Schwerkraftrichtung oberhalb der Taschenrückwand angeordnet. Ferner ist die Aufnahmeöffnung in der Transferzone in Förderrichtung ausgerichtet.

Die Transporttaschen sind nun in der Transferzone insbesondere lückenlos aufeinanderfolgend bzw. hintereinander angeordnet. Die Transporttaschen bilden so insbesondere eine in Förderrichtung durchgängige Auflagefläche für das zu übergebende Transportgut aus.

So können die Transporttaschen in der Transferzone Stoss an Stoss hintereinander angeordnet sein.

Gemäss einer besonderen Weiterbildung sind die Transporttaschen in der Transferzone einander überlappend angeordnet. Die Transporttaschen bilden auf diese Weise insbesondere eine Schuppenformation aus. Entsprechend werden die Transporttaschen in Schuppenformation durch die Transferzone gefördert bzw. bewegt.

Gemäss einer besonderen Ausbildung der Schuppenformation liegen die Transporttaschen jeweils mit einem nachlaufenden Rückwandteil über einem vorlaufenden Rückwandteil des verlängerten Rückwandabschnitts der unmittelbar nachfolgenden Transporttasche auf.

Die Transporttaschen sind in der Transferzone insbesondere in Förderrichtung ausgerichtet.

Zwischen den Aufnahmeöffnungen zweier lückenlos hintereinander angeordneten Transporttaschen wird auf diese Weise ein Auffangbereich ausgebildet. Der Auffangbereich dient nun dem Auffangen des von der Zufördereinrichtung abgegebenen Transportguts.

Der Auffangbereich ist gegen unten insbesondere unter anderem durch den verlängerten Rückwandabschnitt begrenzt. Der verlängerte Rückwandabschnitt bildet hierbei eine erwähnte Auflagefläche für das Transportgut aus.

Auf diese Weise wird gewährleistet, dass das Transportgut in der Transferzone immer auf einer Transporttasche zu liegen kommt und nicht zwischen zwei Transporttaschen hindurch fallen kann.

Die Transporttaschen werden in Ausübung des Verfahrens in liegender Formation durch die Transferzone gefördert bzw. bewegt. Die Transporttaschen liegen hierbei insbesondere einer Taschenauflage auf.

In der Transferzone wird das Transportgut von der Zufördereinrichtung an die Transporttaschen abgegeben. Als charakteristisches Merkmal wird nun das Transportgut nicht direkt in die Aufnahmefächer der Transporttaschen, sondern an eine durch die Transporttasche, insbesondere durch den verlängerten Rückwandabschnitt der Transporttasche ausgebildete Auflagefläche der Transporttasche abgegeben.

Die Transporttaschen werden während der Übergabe des Transportgutes insbesondere in der Transfer-Förderrichtung weiterbewegt.

Das Aufnahmefach ist während der Übergabe des Transportgutes, d.h. in der Transferzone, insbesondere in Offenstellung.

Die Zufördereinrichtung bildet hierzu in der Transferzone den erwähnten Abgabebereich aus, an welchem das Transportgut von der Zufördereinrichtung abgebeben wird.

Die Transporttaschen werden in den Transferzone unterhalb des Abgabebereichs gefördert, derart, dass das Transportgut von oben, insbesondere mittels Schwerkraftunterstützung, von der Zufördereinrichtung an die Transporttaschen abgegeben werden kann.

Das Transportgut wird folglich den Transporttaschen von oben zugeführt und an diese abgegeben. Entsprechend liegt das Transportgut nach dem Transfer auf der Transporttasche, insbesondere auf dem verlängerten Rückwandabschnitt oder auf der Beutelwand der voraus laufenden Transporttasche auf.

Dies Übergabe des Transportgutes kann mittels einer geführten Bewegung erfolgen. Die Übergabe des Transportgutes kann auch mittels einer ungeführten Bewegung, wie z. B. eines freien Falles erfolgen.

Die durch das Transportgut beschrieben Bewegungsbahn im Abgabebereich der Zufördereinrichtung und die durch die Transporttaschen beschriebene Förderbahn in der Transferzone liegen insbesondere in einer gemeinsamen Ebene.

Ein Aufliegen des übergebenen Transportgutes auf der Transporttasche, insbesondere auf der Vorderseite des verlängerten Rückwandabschnitts, wird erst durch einen geneigten oder horizontal ausgerichteten Rückwandabschnitt möglich. Es ist selbsterklärend, dass ein vertikal ausgerichteter, verlängerter Rückwandabschnitt während einer hängenden Förderung der Transporttasche keine Auflagefläche für das Transportgut ausbilden kann.

Gemäss einer Weiterbildung der Vorrichtung weist die Hängefördereinrichtung in Förderrichtung betrachtet mittelbar oder unmittelbar im Anschluss an die Transferzone eine Aufnahmezone aus, in welcher das Transportgut von den Aufnahmefächern der Transporttaschen aufgenommen wird.

Die Transporttaschen werden in der Aufnahmezone so weitergefördert, dass das Transportgut mittels Schwerkraft in die jeweilige Transporttasche gleitet.

Das Aufnahmefach ist in der Aufnahmezone insbesondere in Offenstellung.

Die Transporttaschen werden in der Aufnahmezone in Förderrichtung insbesondere geneigt gefördert bzw. bewegt. Die Hängefördereinrichtung bildet hierzu in der Aufnahmezone insbesondere eine Taschenauflage aus, welcher die geneigt geförderten Transporttaschen aufliegen.

Die Transporttaschen können in der Aufnahmezone, insbesondere im Anschluss an eine geneigte Förderung, in eine hängende Lage gebracht werden.

Die Förderbahn der Transporttaschen verläuft in der Aufnahmezone bezogen auf die Schwerkraftrichtung insbesondere aufwärts.

Die Neigung der Transporttaschen in der Aufnahmezone in Förderrichtung ist so gewählt, dass ein ausserhalb des Aufnahmefaches auf der Transporttasche angeordnetes Transportgut, insbesondere entgegen der Förderrichtung, in das Aufnahmefach gleitet bzw. rutscht. Das Transportgut gleitet dabei insbesondere durch die Aufnahmeöffnung in das Aufnahmefach.

Das Transportgut gleitet dabei insbesondere über einen verlängerten Rückwandabschnitt in das Aufnahmefach. Die Neigung des verlängerten Rückwandabschnitts ist folglich derart, dass der verlängerte Rückwandabschnitt von seinem freien Endabschnitt zur Aufnahmeöffnung hin ein Gefälle aufweist.

Der Neigungswinkel in der Aufnahmezone kann bezogen auf eine Horizontale 70° (Winkelgrad) oder kleiner, insbesondere 60° oder kleiner sein. Der Neigungswinkel in der Aufnahmezone kann zudem 30° oder grösser, insbesondere 45° oder grösser sein.

Das Aufnahmefach ist auch in der Aufnahmezone in Förderrichtung betrachtet relativ zum verlängerten Rückwandabschnitt nachlaufend. Das Aufnahmefach ist im Weiteren bezogen auf die Schwerkraftrichtung oberhalb der Taschenrückwand angeordnet. Die Aufnahmeöffnung ist ebenfalls in Förderrichtung ausgerichtet.

Die Transporttaschen sind auch in der Aufnahmezone insbesondere lückenlos aufeinanderfolgend angeordnet. So können die Transporttaschen in der Aufnahmezone Stoss an Stoss hintereinander angeordnet sein.

Gemäss einer besonderen Ausführung der oben genannten Weiterbildung sind die Transporttaschen in der Aufnahmezone einander überlappend angeordnet. Die Transporttaschen bilden auf diese Weise insbesondere eine bereits oben beschriebene Schuppenformation aus. Entsprechend werden die Transporttaschen in Schuppenformation durch die Aufnahmezone gefördert bzw. bewegt.

Die Ausrichtung der Transporttaschen ist in der Aufnahmezone insbesondere parallel zur Förderrichtung. Entsprechend werden die Transporttaschen in Förderrichtung gezogen.

Die Aufnahmezone schliesst insbesondere unmittelbar an die Transferzone an. Die Transferzone kann insbesondere fliessend in die Aufnahmezone übergehen, so dass der Neigungswinkel der Transporttaschen unmittelbar nach der Abgabe des Transportguts zunimmt.

Es ist grundsätzlich auch denkbar, dass die Transferzone und Aufnahmezone eine gemeinsame Zone ausbilden. In diesem Fall sind die Transporttaschen bereits in der Transferzone geneigt ausgerichtet, so dass die Transportgüter unmittelbar nach ihrer Abgabe, beim Auftreffen auf die Transporttasche in das Aufnahmefach gleiten.

Die Transporttaschen liegen sowohl in der Transferzone als auch in der Aufnahmezone insbesondere mit der Rückseite ihrer Taschenrückwand der Taschenauflage auf.

Die Transporttaschen können flächig, wie z. B. vollflächig, der Taschenauflage aufliegen. Die Transporttaschen können auch abschnittsweise, wie teilflächig oder punktuell, der Taschenauflage aufliegen. Eine teilflächige oder punktuelle Auflage kann über entsprechende Auflagemittel an der Transporttasche, wie Auflagerollen oder Gleitelemente, geschehen.

Die Transporttasche liegt insbesondere mit einem nachlaufenden Taschenabschnitt der Taschenauflage auf. Entsprechend können die Auflagemittel in einem nachlaufenden Taschenabschnitt angeordnet sein.

Die Taschenauflage kann separate Führungselemente zur Abstützung der Transporttaschen umfassen. Die Führungselemente können gegenüber den Transporttaschen stationär sein. In diesem Fall dienen die Führungselement zur rollenden oder gleitenden Abstützung der Transporttaschen.

Die Führungselemente können allerdings auch mit den Transporttaschen mitbewegt werden, z. B. über einen Rundlauf.

Gemäss einer besonderen Ausführungsform wird die Taschenauflage durch Förderorgane der jeweils nachfolgenden Transporttaschen ausgebildet. Die Transporttaschen können direkt oder indirekt auf den Förderorganen aufliegen.

Die Transporttaschen werden insbesondere über die Befestigungsmittel der Förderorgane direkt oder indirekt abgestützt. Hierzu eignen sich insbesondere Befestigungsmittel, welche die aufliegenden Transporttaschen über die gesamte Breite abstützen.

Diese Ausführungsform kann insbesondere im Zusammenhang mit der Ausbildung einer Schuppenformation der Transporttaschen zum Einsatz kommen. Sie weist den grossen Vorteil auf, dass keine separaten Auflageelemente vorzusehen sind.

Gemäss einer Weiterbildung der Transporttasche hat der verlängerte Rückwandabschnitt zusätzlich die Funktion eines Tragabschnittes. Die Befestigungsmittel sind gemäss dieser Weiterbildung insbesondere am verlängerten Rückwandabschnitt, insbesondere am freien Endabschnitt des verlängerten Rückwandabschnittes, angeordnet.

Das Befestigungsmittel ist insbesondere bei einer geneigten oder liegenden Förderung gegenüber dem Aufnahmefach insbesondere vorlaufend angeordnet.

Das Befestigungsmittel umfasst insbesondere ein Befestigungselement, über welches die Transporttasche am Förderorgan befestigt werden kann, insbesondere lösbar befestig werden kann. Das Befestigungselement kann z. B. zum Anhängen der Transporttasche an das Förderorgan ausgelegt sein.

So kann das Befestigungselement z. B. eine Öse sein, über welche die Transporttasche am Förderorgan eingehängt wird. Das Befestigungselement kann auch ein Haken sein, über welchen die Transporttasche am Förderorgan eingehängt wird.

Ein weiterer Aspekt betrifft ferner auch eine Transporttasche für eine oben beschriebene Vorrichtung.

Die Transporttasche enthält ein Aufnahmefach mit einer Aufnahmeöffnung, eine Taschenrückwand und ein Befestigungsmittel zum Verbinden der Transporttasche mit einem Förderorgan der Hängefördereinrichtung.

Die Transporttasche weist gemäss einer Weiterbildung der Erfindung in ihrer Offenstellung einen über die Aufnahmeöffnung hinaus verlängerten Rückwandabschnitt auf.

Der verlängerte Rückwandabschnitt dient insbesondere zur Ausbildung einer Ablagefläche für das in die Transporttasche zu transferierende Transportgut.

Die Länge des verlängerten Rückwandabschnitt beträgt in der Offenstellung der Transporttasche insbesondere mindestens ein Viertel der Höhe bzw. Aufnahmetiefe des Aufnahmefachs. Die Länge des verlängerten Rückwandabschnitt kann auch mindestens ein Drittel oder mindestens die Hälfte der Höhe bzw. Aufnahmetiefe des Aufnahmefachs entsprechen. Die Höhe bzw. Aufnahmetiefe des Aufnahmefachs entspricht der Distanz zwischen Taschenboden und der Aufnahmeöffnung.

Das Aufnahmefach ist insbesondere derart ausgebildet, dass dieses eine Offenstellung und eine platzsparende Kompaktlage einnehmen kann.

In der Offenstellung ist das Aufnahmefach expandiert und die Aufnahmeöffnung offen. Das Aufnahmefach bildet einen Aufnahmeraum zur Aufnahme eines Transportgutes aus.

In der Kompaktlage ist das Aufnahmefach platzsparend zusammengedrückt bzw. komprimiert, z. B. zusammengefaltet, und bildet entsprechend keinen oder einen verkleinerten Aufnahmeraum aus.

Die Beutelwand kann hierzu teilweise oder vollständig flexibel ausgebildet sein. Die Beutelwand kann insbesondere faltbar sein.

Die Wände der Transporttasche, insbesondere die Beutelwand, können aus einem textilen Flächengebilde, wie Gewebe, bestehen oder dieses enthalten.

Die Taschenrückwand und insbesondere der verlängerte Rückwandabschnitt ist insbesondere eigenstabil ausgebildet.

Die Taschenrückwand besitzt insbesondere eine derart genügende Steifigkeit, um in horizontaler Lage ohne grossflächige Abstützung von unten eine stabile Schuppenformation ausbilden zu können.

Die Transporttasche kann im Weiteren Öffnungsmittel enthalten, über welche das Aufnahmefach, insbesondere entgegen der Schwerkraft, in die Offenstellung bewegt bzw. in dieser gehalten werden kann.

Die Öffnungsmittel können Rückstellmittel an der Transporttasche umfassen, welche mittels einer der Schwerkraft entgegenwirkenden Rückstellkraft dafür sorgen, dass das Aufnahmefach ohne Einwirken einer der Rückstellkraft entgegenwirkenden Gegenkraft, wie Anpressdruck, geöffnet und in der Offenstellung gehalten wird.

Die Rückstellelemente können zum Beispiel auf die Wände des Aufnahmefachs einwirkende federelastische Elemente, wie Federstahlelemente, sein. Diese können beispielsweise die Beutelwand von der Taschenrückwand wegdrücken.

Die Öffnungsmittel können auch ein Offenhalteelement, wie z. B. ein schwenkbarer Bügel, an der Transporttasche umfassen, welches die Transporttasche durch das Eigengewicht in eine Offenstellung überführen bzw. in dieser hält.

Die Öffnungsmittel können auch ein Offenhalteelement, wie z. B. ein schwenkbarer Bügel, an der Transporttasche umfassen, welches die Transporttasche durch eine mechanische Fixierung, wie Rastposition oder Einhakposition, in einer Offenstellung hält. Die Funktionen der beiden oben genannten Offenhalteelemente können auch kombiniert werden.

Es ist ferner auch möglich, dass die Öffnungsmittel an der Transporttasche mit einem Aktivierungsmittel der Hängefördereinrichtung zusammenwirken, um die Transporttasche in die Offenstellung zu überführen bzw. in dieser zu halten.

So kann das Öffnungsmittel ein Steuerelement, wie Steuerrolle, an der Transporttasche umfassen, welche mittels einem als Steuerkulisse ausgebildeten Aktivierungsmittel zusammenwirkt.

Die Steuerkulisse ist gegenüber den Transporttaschen insbesondere stationär.

Das Steuerelement kann z. B. an der Beutelwand der Transporttasche angeordnet sein.

Die Steuerkulisse bewirkt nun eine Positionsänderung der Steuerrolle und entsprechend der Beutelwand relativ zur Taschenrückwand, welches zu einem Öffnen der Transporttasche führt.

Das Aktivierungsmittel können auch einen Magneten umfassen, welcher auf ein magnetisches Öffnungsmittel, wie Metallbügel, eine magnetische Kraft ausübt und so die Transporttasche in eine Offenstellung überführt bzw. in dieser hält.

Gemäss einer Weiterbildung der Transporttasche enthält diese im verlängerten Rückwandabschnitt mindestens eine und insbesondere mehrere Durchgangsöffnungen. Die Durchgangsöffnungen sind insbesondere Löcher. Die Löcher können ein Lochbild ausbilden.

Die mindestens eine Durchgangsöffnung dient zur optischen Überprüfung, ob das Fördergut noch auf dem Rückwandabschnitt angeordnet ist oder sich im Aufnahmefach befindet. Die optische Überprüfung, welche im Anschluss an die Aufnahmezone erfolgt, kann von Auge oder automatisiert mittels optoelektronischer Sensormittel, welche den Lichtdurchlass durch die mindestens eine Durchgangsöffnung erfassen, geschehen.

Wird bei dieser optischen Überprüfung eine Unregelmässigkeit festgestellt, z. B. wenn das Fördergut nicht vollständig im Aufnahmefach verstaut ist, so kann die betreffende Transporttasche über eine Ausschleuseinrichtung aus dem Förderstrom ausgeschleust werden.

Im Weiteren kann im Anschluss an die Aufnahmezone bzw. an die oben genannten optoelektronischen Sensormittel eine Ausleseeinrichtung zum Auslesen von Produktdaten aus einem am Transportgut oder an der Transporttasche angeordneten Datenträger angeordnet sein.

Die Transporttasche kann wie erwähnt Auflagemittel, wie Gleitelemente oder Auflagerollen, zur gleitenden oder rollenden Auflage der Transporttasche entlang einer Taschenauflage enthalten. Die Auflagemittel können z. B. an der Taschenrückwand, insbesondere auf ihrer Rückseite angeordnet sein. Die Auflagemittel können in Förderrichtung betrachtet, seitlich von der Transporttasche angeordnet sein.

Die Hängefördereinrichtung ist zum hängenden, insbesondere frei hängenden Fördern der Transporttaschen ausgelegt. Die Hängefördereinrichtung ist insbesondere zum einzeln hängenden Fördern der Transporttaschen ausgelegt. D.h. die Transporttaschen werden ausserhalb der Transfer- und Aufnahmezone auch hängend bzw. frei hängend gefördert.

Der Begriff "einzeln" bedeutet, dass die Transporttaschen nicht direkt miteinander verbunden, z. B. verkettet; sind.

Die Transporttaschen werden insbesondere auch einzeln durch die Transfer- und Aufnahmezone geführt.

So können die Transporttaschen im Anschluss an die Aufnahmezone, nachdem die Transportgüter in die Aufnahmefächer der Transporttaschen gerutscht sind, einzeln hängend weitergefördert werden.

Die Förderorgane umfassen ebenfalls Befestigungsmittel zum Befestigen, insbesondere lösbaren Befestigen der Transporttaschen am Förderorgan. Die Befestigungsmittel können Befestigungskörper sein. Diese können in Förderrichtung betrachtet seitlich wegführende Befestigungsarme umfassen, über welche die Transporttaschen am Förderorgan befestigt sind.

Die Befestigungsmittel der Förderorgane und Transporttaschen können so ausgelegt sein, dass diese ein Schwenken der Transporttasche relativ zum Förderorgan zulassen.

Die Förderorgane sind erfindungsgemäß Laufwagen welche über Laufrollen entlang mindestens einer Führungsschiene rollend geführt sind.

Die Laufwagen sind erfindungsgemäß als Einzelwagen ausgebildet. Dies erlaubt die individuelle Förderung der Transporttaschen. Die Laufwagen können als Aussen- oder Innenläufer ausgebildet sein.

Die Hängefördereinrichtung kann allerdings auch ein Kettenförderer sein, bei welchem die Förderorgane an einer angetriebenen Förderkette befestigt sind.

Die Zufördereinrichtung kann dazu ausgelegt sein, das Transportgut vereinzelt bzw. portioniert dem Abgabebereich zuzuführen. Das Transportgut wird hierbei jeweils vereinzelt bzw. portioniert den einzelnen Transporttaschen übergeben.

Die Zufördereinrichtung kann ein Bandförderer sein. Das Transportgut wird entsprechend auf einem Förderband dem Abgabebereich zugeführt. Der Abgabebereich kann an einer Umlenkstelle des Förderbandes angeordnet sein, an welcher das Förderband nach unten umgelenkt wird.

Auf der Förderfläche des Förderbandes können Begrenzungselemente, wie Quer- bzw. Trennleisten angeordnet sein, welche das Förderband in einzelne offene Fächer unterteilen, welche die vereinzelte bzw. portionierte Förderung des Transportgutes erlauben. Die in den Fächern zum Abgabebereich geförderten Transportgüter sind zur Abgabe an jeweils eine Transporttasche vorgesehen. D.h., das Transportgut eines Faches wird einer einzelnen Transporttasche übergeben.

Die Zufördereinrichtung und die Hängefördereinrichtung werden in der Transferzone insbesondere taktsynchron zueinander betrieben. Entsprechend werden die Fächer des Förderbandes und die Transporttaschen taktsynchron zueinander in die Transferzone bewegt.

Das Transportgut kann ein Schüttgut, wie Pulver, Granulat, Kleinteile (z. B. Schrauben), etc. sein. Das Transportgut umfasst jedoch insbesondere Stückgüter, d.h. einzelne diskrete Gegenstände. Diese Gegenstände können Haushaltsartikel, Sportartikel, Kleider, Schuhe, etc. sein.

Die Anlage ist insbesondere dazu ausgelegt, Transporttaschen mit einzelnen Stückgütern zu beschicken.

Die Stückgüter werden hierzu insbesondere einzeln von der Zufördereinrichtung der Transferzone zugefördert. So können die Stückgüter einzeln in Fächern des oben beschriebenen Bandförderers dem Abgabebereich zugefördert werden.

Die Stückgüter können beispielsweise manuell vereinzelt und der Zufördereinrichtung übergeben werden. So können die Stückgüter durch das Personal einzeln in die Fächer des Bandförderers abgefüllt werden.

Es kann eine Ausleseeinrichtung vorgesehen sein, welches bei der Übergabe der Stückgüter an die Zufördereinrichtung Informationen aus Datenträgern der Stückgütern ausliest.

Die Ausleseeinrichtung kann z. B. ein optoelektronisches Lesegerät sein, welches einen Strichcode oder einen 2D-Code, wie QR-Code, ausliest.

Die Ausleseeinrichtung kann auch zum Auslesen von RFID-Tags an den Stückgütern ausgelegt sein.

Das Auslesen von Produktinformationen bei der Übergabe der Transportgüter an die Zufördereinrichtung dient unter anderem der Nachverfolgung des Güterflusses.

Die beschriebene Vorrichtung weist den Vorteil auf, dass das Transportgut bei der Abgabe an die Hängefördereinrichtung von der Zufördereinrichtung nicht mehr mit hoher Präzision durch die Aufnahmeöffnung des Aufnahmefachs befördert werden muss.

Das Transportgut wird erst in einem nachfolgenden Schritt nach dessen Abgabe an die Hängefördereinrichtung von den Aufnahmefächern der Transporttaschen aufgenommen.

Die Abgabe des Transportgutes von der Zufördereinrichtung an die Hängefördereinrichtung erlaubt deshalb grössere Toleranzen, da das Transportgut bei seiner Abgabe nicht präzise durch eine Aufnahmeöffnung bewegt werden muss. Entsprechend kann das Transportgut im Transferbereich auch mit höheren Geschwindigkeiten, d.h. Taktraten, transferiert werden.

Die Verwendung der in der vorliegenden Beschreibung offenbarten Transporttasche beschränkt sich nicht auf die Präsenz einer Zuführeinrichtung sowie auf die besondere Ausgestaltung des Abgabebereichs und der Transferzone wie sie ebenfalls in vorliegender Beschreibung offenbart sind. Die Transporttasche ist vielmehr für den Einsatz in jeder Art von Hängefördereinrichtungen geeignet, bei welchen Transportgüter in Transporttaschen hängend transportiert werden.

Gemäss einer Weiterbildung der Transporttasche ist das mindestens eine Steuerelement im Bereich der Aufnahmeöffnung angeordnet. Das mindestens eine Steuerelement kann zum Beispiel im Bereich des Randabschlusses der Aufnahmeöffnung angeordnet sein.

Das mindestens eine Steuerelement kann wie erwähnt eine Steuerrolle sein. Die geometrische Drehachse der Steuerrolle ist insbesondere quer zur Förderrichtung orientiert.

Das mindestens eine Steuerelement kann allerdings auch ein Gleitelement sein. Das Gleitelement kann z. B. ein Zapfen oder Stift sein. Das Gleitelement kann insbesondere eine Gleitbuchse sein.

Die Transporttasche enthält insbesondere zwei, an der Beutelwand angeordnete Steuerelemente. Die Steuerelemente sind insbesondere in Förderrichtung betrachtet seitlich von der Beutelwand angeordnet. Die Steuerelemente stehen in Förderrichtung betrachtet insbesondere seitlich von der Beutelwand ab.

Die Steuerelemente sind insbesondere quer zur Förderrichtung voneinander beabstandet an der Beutelwand angeordnet.

Die beiden Steuerelemente können über ein Verbindungselement miteinander verbunden sein.

Das Verbindungselement ist insbesondere starr ausgebildet.

Das Verbindungselement kann eine Verbindungsstange bzw. ein Verbindungsstab, z. B. aus Metall oder Kunststoff, sein.

Das Verbindungselement kann zu den Steuerelementen hin jeweils ein freies Ende ausbilden, an welchen jeweils ein Steuerelement angeordnet ist. Sind die Steuerelemente Steuerrollen, so sind diese insbesondere drehbar am freien Ende des Verbindungselementes gelagert.

Das Verbindungselemente kann auch zum seitlichen Aufspannen der Beutelwand im Bereich der Aufnahmeöffnung dienen.

Das Verbindungselement kann ferner Teil der Umfassung bzw. des Randabschlusses der Aufnahmeöffnung ausbilden.

Das Verbindungselement kann durch eine an der Beutelwand ausgebildete Aufnahmeschlaufe geführt und auf diese Weise an der Beutelwand gehalten sein.

Die Aufnahmeschlaufe bildet insbesondere mindestens einen Abschnitt des Randabschlusses der Aufnahmeöffnung aus.

Die Aufnahmeöffnung ist erfindungsgemäss rahmenlos ausgebildet. Das heisst, die Aufnahmeöffnung der Transporttasche wird insbesondere nicht durch eine geschlossene Rahmenkonstruktion eingefasst.

Es kann sogar die gesamte Transporttasche rahmenlos ausgebildet sein.

Die Aufnahmeöffnung kann gemäss einer Ausführungsform durch einen geschlossenen Bügel eingefasst sein.

Die Aufnahrneöffnung kann gemäss einer Ausführungsform durch einen offenen Bügel eingefasst sein. Der Bügel, auch Öffnungsbügel genannt, zeichnet sich insbesondere durch eine mehrdimensionale Formgebung aus. Der Bügel kann U- oder C-förmig sein.

Der Bügel ist insbesondere zur Taschenrückwand hin offen ausgebildet.

Das oder die Steuerelemente sind insbesondere am Bügel angeordnet.

Der Bügel kann ausschliesslich an der Beutelwand angeordnet sein. Der Bügel ist insbesondere nicht direkt mit der Taschenrückwand verbunden sein. Das heisst, der Bügel ist höchstens indirekt über die Beutelwand mit der Taschenrückwand verbunden.

Der Bügel kann allerdings auch mit der Taschenrückwand verbunden sein.

Der Bügel ist allerdings insbesondere nicht direkt mit dem Befestigungsmittel verbunden. Das Befestigungsmittel ist insbesondere nicht Teil des Bügels.

Der Bügel kann durch mindestens eine Schlaufe in der Beutelwand geführt sein.

Gemäss einer anderen Ausführungsform ist die Aufnahmeöffnung bügellos ausgebildet. Das heisst, die Aufnahmeöffnung der Transporttasche wird insbesondere nicht durch einen offenen oder geschlossenen Bügel eingefasst.

Das mindestens eine Steuerelement ist insbesondere ausschliesslich über die Beutelwand mit der Taschenrückwand verbunden.

Zwischen dem Steuerelement und der Taschenrückwand ist insbesondere lediglich bzw. ausschliesslich ein Wandabschnitt der Beutelwand angeordnet.

Die Taschenrückwand besitzt insbesondere eine derart genügende Steifigkeit, dass sich diese in einer geneigten oder horizontalen Lage unter Schwerkrafteinfluss nicht verformt.

Die Taschenrückwand kann insbesondere aus einem Plattenelement bestehen.

Die Beutelwand kann aus mehreren Taschenwänden bestehen. So kann die Beutelwand einen Taschenboden, seitliche, insbesondere zwei seitlich angeordnete Taschenwände sowie eine Vorderwand umfassen, welche der Taschenrückwand gegenüber liegt.

Die Taschenwände können eigenstabil sein.

"eigenstabil", auch "formstabil" genannt, bedeutet im Zusammenhang mit den Taschenwänden bzw. der Taschenrückwand im Rahmen dieser Erfindung insbesondere, dass die Taschenwand bzw. Taschenrückwand auch bei einer Veränderung der Lage der Transporttasche ihre Form beibehält.

Die einzelnen Taschenwände sind insbesondere beweglich, z. B. scharnierartig miteinander verbunden. Die Taschenwände lassen sich insbesondere entlang ihrer Verbindung um eine Schwenkachse relativ zueinander verschwenken. Die Taschenwände bilden entlang ihrer beweglichen Verbindung insbesondere Faltachsen aus, so dass sich die Beutelwand entsprechend zusammenfalten lässt.

Die Beutelwand kann aus - insbesondere formstabilen - Plattenelementen bestehen. So können insbesondere die oben genannten Taschenwände aus einzelnen Plattenelementen bestehen. Die Plattenelemente können, wie oben erwähnt, beweglich, z. B. scharnierartig miteinander verbunden sein.

Die Beutelwand kann einteilig oder mehrteilig aufgebaut sein. Bei einem mehrteiligen Aufbau bestehen die Taschenwände aus einzelne Plattenelementen, welche z. B. entlang ihrer Faltachsen miteinander verbunden sein.

Gemäss einer besonderen Ausführungsvariante sind Beutelwand und Taschenrückwand einteilig aufgebaut.

Bei einem einteiligen Aufbau besteht die Beutelwand bzw. bestehen Beutelwand und Taschenrückwand aus einer einzelnen Platte. Die einzelnen Taschenwände werden durch Biegen bzw. Knicken der Platte entlang von Biege- bzw. Knickachsen geformt. Die Biege- bzw. Knickachsen können insbesondere Faltachsen ausbilden, entlang welcher sich die Wandelemente zusammenfalten lassen. Entsprechend werden an den Biege- bzw. Knickachsen scharnierartige Verbindungen ausgebildet.

Die Plattenelemente bzw. die Platte können aus einem Kunststoff gefertigt sein. Die Plattenelemente bzw. die Platte können aus einem Verbundmaterial sein.

Die Plattenelemente bzw. die Platte können Sandwichplatten sein, umfassend zwei Deckschichten und einen dazwischen angeordneten Plattenkern. Die Plattenelemente bzw. die Platte können insbesondere als Hohlkammerplatten vorliegen, gemäss welchen der Plattenkern Hohlkammern ausbildet.

Die Hohlkammern im Plattenkern können parallel oder quer zur Plattenoberfläche verlaufen bzw. orientiert sein. Der Plattenkern kann z. B. ein Wabenkern sein.

Die Dicke der Plattenelemente bzw. der Platte kann 1 bis 10 mm, insbesondere 2 bis 5 mm betragen.

Das Aufnahmefach bildet in der Kompaktlage insbesondere keine Aufnahmeöffnung oder eine Aufnahmeöffnung von geringerer Grösse aus als in der Offenstellung.

Die Aufnahmeöffnung ist in der Kompaktlage insbesondere geschlossen oder insbesondere mindestens teilweise geschlossen. Die Aufnahmeöffnung ist in der Offenstellung insbesondere offen oder insbesondere mindestens teilweise offen.

Kompaktlage bedeutet insbesondere, dass sich die Aufnahmeöffnung nicht in einer Befülllage befindet, in welcher die Transporttasche durch die Aufnahmeöffnung mit dem Transportgut befüllt werden kann. Offenstellung bedeutet dahingegen insbesondere, dass sich die Aufnahmeöffnung in einer Befülllage befindet.

Die Aufnahmeöffnung ist in hängender Lage der Transporttasche insbesondere nach oben gerichtet. Das heisst, das Aufnahmefach ist in hängender Lage nach oben offen.

Das Befestigungsmittel ist insbesondere mit der Taschenrückwand verbunden bzw. an dieser angeordnet. Das Befestigungsmittel ist insbesondere mit dem verlängerten Rückwandabschnitt verbunden bzw. an diesem angeordnet.

Die in vorliegender Beschreibung offenbarte Hängefördereinrichtung ist - insbesondere im Zusammenhang mit den Förderorganen, der Führungsschiene und der Steuerkulisse - ebenfalls nicht auf die Präsenz einer Zuführeinrichtung sowie auf die besondere Ausgestaltung des Abgabebereichs und der Transferzone wie sie ebenfalls in vorliegender Beschreibung offenbart sind beschränkt.

Die Transporttaschen finden ganz allgemein Verwendung in einer Hängefördereinrichtung für die hängende Förderung von Transportgütern. Diese enthält eine Mehrzahl von entlang einer Förderbahn in einer Förderrichtung bewegbaren Förderorganen, an welchen die Transporttaschen angeordnet bzw. befestigt sind.

Die Förderorgane werden, wie bereits erwähnt, erfindungsgemäß entlang von Führungsschienen bewegt, welche die Förderbahn vorgeben.

Die Hängefördereinrichtung enthält nun mindestens eine Steuerkulisse, welche derart mit dem Steuerelement zusammenwirkt, dass diese eine Positions-änderung des Steuerelements und entsprechend der Beutelwand relativ zur Taschenrück-wand bewirkt. Dieser Vorgang wiederum bewirkt das Öffnen der Transport-tasche.

Die Steuerkulisse ist insbesondere eine Führungskulisse, z. B. in Form einer Kulissenschiene. Die Führungskulisse bildet insbesondere eine Führungsfläche für das Steuerelement aus. Bei einem als Steuerrolle ausgebildeten Steuerelement ist die Führungsfläche entsprechend eine Abrollfläche. Bei einem als Gleitelement ausgebildeten Steuerelement ist die Führungsfläche entsprechend eine Gleitfläche.

Die Steuerelemente werden durch die Steuerkulisse insbesondere zwangsgeführt. Diese Zwangsführung ist so ausgelegt, dass diese die oben beschriebene Positions-änderung und somit das Öffnen der Transporttasche auslöst.

Die Steuerkulisse bzw. die durch die Steuerkulisse bewirkte Zwangsführung kann so ausgelegt sein, dass diese die Aufnahmeöffnung im Anschluss an den Öffnungsvorgang, z. B. zwecks Befüllung der Transporttasche, in der Offenstellung hält.

Das Öffnen der oben beschriebenen Transporttaschen, welche entlang der Förderbahn der oben beschriebenen Hängefördereinrichtung gefördert werden, zeichnet sich durch folgende Schritte aus:
- Fördern der Transporttaschen in eine Öffnungszone der Hängefördereinrichtung;
- Zusammenwirken der mindestens einen Steuerkulisse mit dem mindestens einen Steuerelement der Transporttasche und dadurch
- Ausführen einer Positions-änderung des mindestens einen Steuerelements und entsprechend der Beutelwand relativ zur Taschenrück-wand, und dadurch
- Öffnen der Transport-tasche.

Das oben beschriebene Öffnen der Transporttasche geschieht insbesondere in hängender bzw. mindestens teilweise hängender Lage der Transporttasche.

Die Positionsänderung zeichnet sich insbesondere durch ein Anheben des mindestens einen Steuerelementes relativ zur Taschenrückwand aus. Dadurch nimmt die Transporttasche bzw. das dazugehörige Aufnahmefach eine Offenstellung ein.

Zusammen mit dem Steuerelement wird insbesondere auch ein gegebenenfalls vorhandenes Verbindungselement angehoben.

Die Positionsänderung kann auch eine Bewegung des mindestens einen Steuerelementes von der Taschenrückwand weg umfassen. Eine Kombination der beiden vorgenannten Bewegungen ist ebenfalls möglich.

Gemäss einer Ausführungsform der Erfindung beschreibt die durch das Zusammenwirken der mindestens einen Steuerkulisse mit dem mindestens einen Steuerelement ausgelöste Positionsänderung eine Bewegungsbahn, welche nicht kreisbogenförmig ist.

Dies ist insbesondere dann der Fall, wenn die mindestens eine Steuerrolle nicht über ein starres Element, wie Öffnungsbügel, mit der Taschenrückwand verbunden ist.

Die mindestens eine Steuerrolle ist gemäss dieser Ausführungsform insbesondere über die Beutelwand mit der Taschenrückwand verbunden.

Gemäss einer Ausführungsform der Erfindung ist die Positionsänderung des mindestens einen Steuerelements und entsprechend der Beutelwand relativ zur Taschenrück¬wand eine Schwenkbewegung um eine an der Transporttasche und insbesondere an der Taschenrückwand angeordnete, geometrische Schwenkachse .

Dies ist insbesondere dann der Fall, wenn die mindestens eine Steuerrolle über ein starres Element, wie Öffnungsbügel, mit der Taschenrückwand verbunden ist, wobei das starre Element an der Taschenrückwand um eine geometrische Schwenkachse schwenkbar gelagert ist.

Das Zusammenwirken der mindestens einen Steuerkulisse mit dem mindestens einen Steuerelement der Transporttasche kann eine weitere Positionsänderung des mindestens einen Steuerelements zusammen mit der Beutelwand und der Taschenrück-wand relativ zum Förderorgan bewirken.

Die Positionsänderung des mindestens einen Steuerelements relativ zur Taschenrück¬wand und die weitere Positionsänderung des mindestens einen Steuerelements zusammen mit der Beutelwand und der Taschenrück¬wand relativ zum Förderorgan können sequentiell oder überlagert sein.

Gemäss einer Weiterbildung dieser Ausführungsvariante löst das Zusammenwirken der mindestens einen Steuerkulisse mit dem mindestens einen Steuerelement der Transporttasche eine Schwenkbewegung der Beutelwand gemeinsam mit der Taschenrückwand, und insbesondere der Transporttasche, um eine ausserhalb der Beutelwand und der Taschenrückwand, insbesondere ausserhalb der Transporttasche, angeordnete, geometrische Schwenkachse aus.

In diesem Fall bewirkt das Zusammenwirken der mindestens einen Steuerkulisse mit dem mindestens einen Steuerelement der Transporttasche eine Positions¬änderung des mindestens einen Steuerelements zusammen mit der Beutelwand und der Taschenrückwand, und insbesondere zusammen mit der Transporttasche relativ zum Förderorgan.

So kann das mindestens eine Steuerelement sowohl um eine, wie oben beschrieben, an der Taschenrückwand als auch um eine weitere, ausserhalb der Beutelwand und der Taschenrückwand, insbesondere ausserhalb der Transporttasche, angeordnete, geometrische Schwenkachse geschwenkt werden.

Die Schwenkbewegungen um die beiden genannten geometrischen Schwenkachsen können sequentiell sein. Die Schwenkbewegungen um die beiden genannten geometrischen Schwenkachsen können allerdings auch überlagert sein.

Die Führungsfläche der mindestens einen Führungskulisse kann eine Steigung aufweisen, welche insbesondere ein Anheben des mindestens einen Steuerelementes relativ zur Taschenrückwand bewirkt.

Teilweise hängende Lage bedeutet insbesondere, dass mindestens ein Teil des Gewichts der Transporttasche durch das Förderorgan getragen wird. So kann die Transporttasche in der teilweise hängenden Lage von unten abgestützt sein. Ferner kann teilweise hängend auch bedeuten, dass die Transporttasche eine geneigte Lage einnimmt.

Die Transporttasche wird erfindungsgemäß mit vorlaufender Beutelwand in Förderrichtung gefördert.

In diesem Zusammenhang ist es auch möglich, dass die Transporttaschen in der Hängefördereinrichtung entlang einer Förderbahn in eine erste Förderrichtung sowie in eine, der ersten Förderrichtung entgegen gerichteten zweiten Förderrichtung gefördert werden kann.

Im Folgenden wird der Erfindungsgegenstand anhand von Ausführungsbeispielen, welche in den beiliegenden Figuren dargestellt sind, näher erläutert. Es zeigen jeweils schematisch:
- Figur 1: eine Seitenansicht einer ersten Ausführungsform einer erfindungsgemässen Vorrichtung im Bereich der Transferzone;
- Figur 2: eine Seitenansicht einer zweiten Ausführungsform einer erfindungsgemässen Vorrichtung im Bereich der Transferzone;
- Figur 3a: eine Seitenansicht einer ersten Ausführungsform einer Transporttasche mit Förderorgan;
- Figur 3b: eine Seitenansicht der Transporttasche nach Figur 3a mit einer weiteren Ausführungsform eines Förderorgans;
- Figur 4a-4c: eine Seitenansicht einer weiteren Ausführungsform einer Transporttasche;
- Figur 4d: eine perspektivische Ansicht der Transporttasche nach Figur 4a-4c;
- Figur 5: eine Seitenansicht einer weiteren Ausführungsform einer Transporttasche;
- Figur 6a: eine Seitenansicht einer weiteren Ausführungsform einer Transporttasche;
- Figur 6b: eine perspektivische Ansicht der Transporttasche nach Figur 6a;
- Figur 7: eine perspektivische Ansicht einer weiteren Ausführungsform einer Transporttasche;
- Figur 8: eine perspektivische Ansicht einer weiteren Ausführungsform einer Transporttasche;
- Figur 9: eine perspektivische Ansicht einer weiteren Ausführungsform einer Transporttasche.

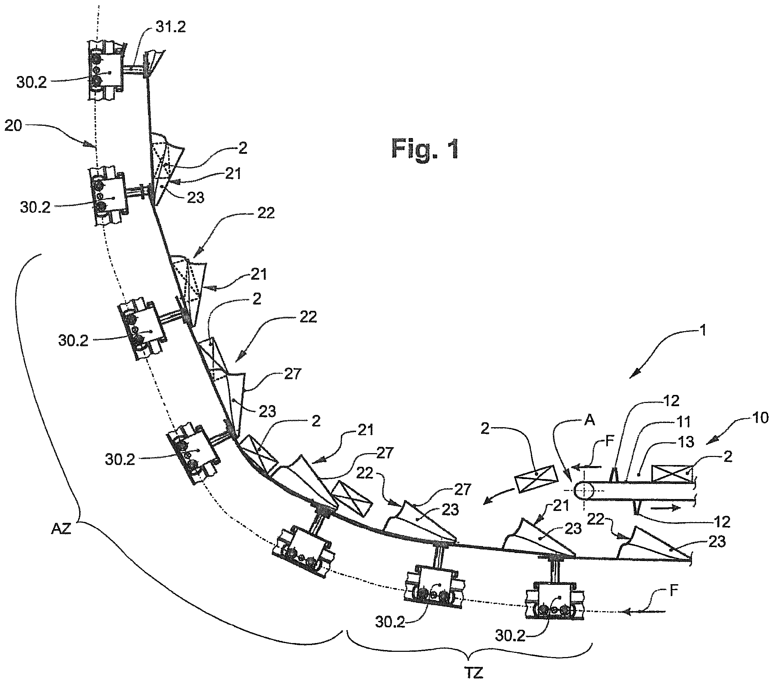

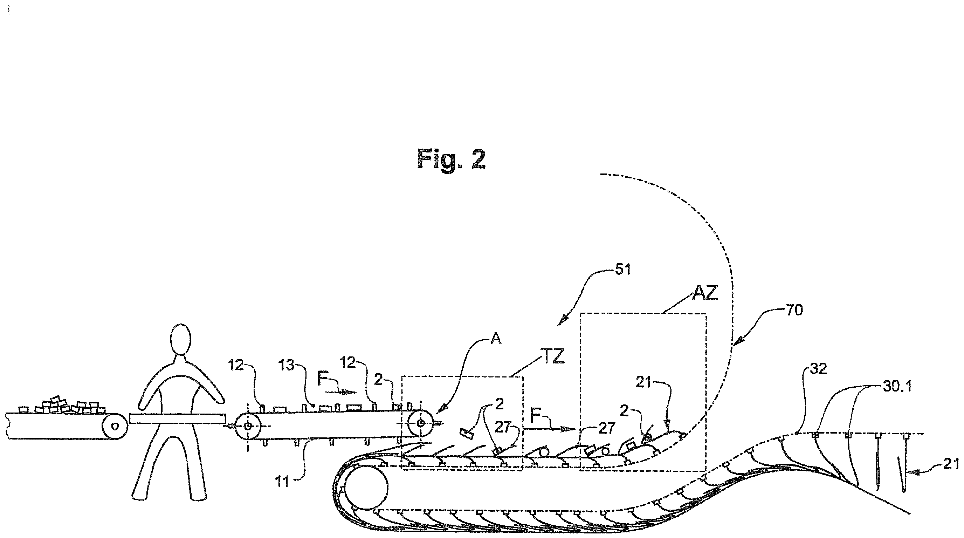

Die Vorrichtungen 1, 51 gemäss den beiden Ausführungsformen nach Figur 1 und 2 sind für den Transport bzw. die Förderung von Stückgütern 2 ausgelegt. Die Stückgüter 2 werden in den Vorrichtungen 1, 51 gemäss den beiden Ausführungsformen mittels eines Bandförderers 10 der Transferzone TZ zugefördert. Das Förderband 11 des Bandförderers 10 ist als Fächerband ausgebildet und weist Querleisten 12 auf, welche das Förderband 11 in Förderrichtung F in einzelne Fächer 13 unterteilen.

Pro Fach 13 wird jeweils ein einzelnes Stückgut 2 zur Transferzone TZ hin gefördert. Der Bandförderer 10 bildet eingangs der Transferzone TZ einen Abgabebereich A aus, in welchem die Stückgüter 2 aus den Fächern 13 abgegeben werden. Das Fächerband 11 wird im Abgabebereich A in eine Umlenkung geführt und nach unten umgelenkt. Die Stückgüter fallen auf diese Weise in der Transferzone TZ schwerkraftbedingt vom Fächerband 11 nach unten.

Die Hängefördereinrichtung 20, 70 umfasst eine Mehrzahl von Transporttaschen 21, welche jeweils an einem Laufwagen 30.1, 30.2 befestigt sind. Die Laufwagen 30.1, 30.2 sind jeweils über Laufrollen einzeln entlang einer Führungsschiene 32 geführt.

Die Transporttaschen 21 bilden jeweils ein Aufnahmefach 23 zur Aufnahme der Stückgüter 2 aus. Das Aufnahmefach 23 wird zur Rückseite hin durch eine Taschenrückwand 24 und zur Vorderseite hin durch eine Beutelwand 27 begrenzt. Das Aufnahmefach 23 bildet ferner eine Aufnahmeöffnung 22 aus.

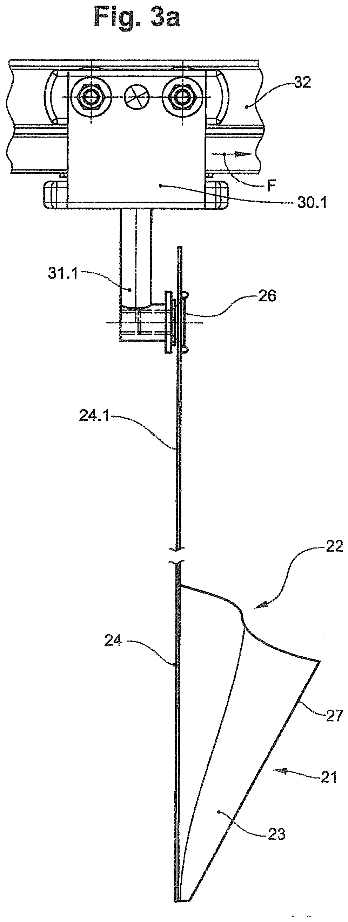

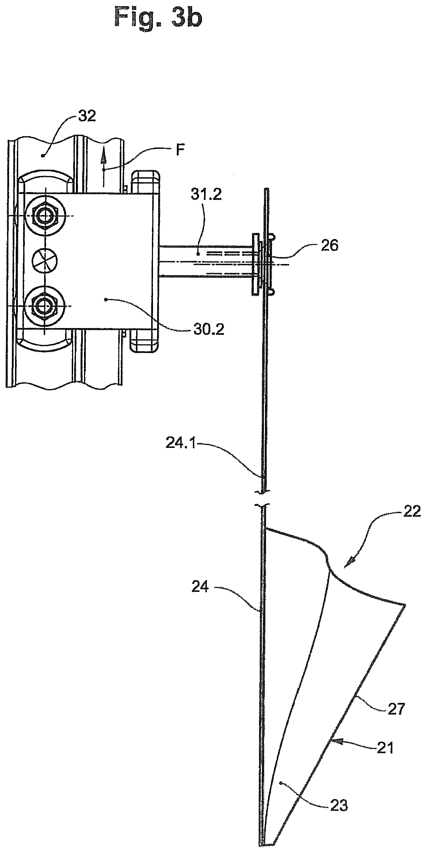

Die Transporttaschen 21 bilden ferner jeweils einen verlängerten Rückwandabschnitt 24.1 aus. Am freien Endabschnitt des verlängerten Rückwandabschnitts 24.1 sind Halteösen 26 zum Befestigen der Transporttaschen 21 am Förderorgan 30.2 angebracht. Das Aufnahmefach 23 ist zur Seite des verlängerten Rückwandabschnitts 24.1 hin geöffnet (siehe auch Figur 3a und 3b).

Die Laufwagen 30.1, 30.2 umfassen jeweils einen Befestigungskörper 31.1, 31.2 zum Befestigen der Transporttasche 21 am Laufwagen 30.1, 30.2.

Gemäss der Ausführungsform nach Figur 1 ist die Befestigung der Transporttasche 21 so ausgelegt, dass deren Taschenrückwand 24 in Förderrichtung F ausgerichtet ist.

Die Transporttaschen 21 werden nun in Schuppenformation und in horizontaler Lage unterhalb des Abgabebereichs A in die Transferzone TZ gefördert.

Gemäss der Ausführungsform nach Figur 2 ist die Befestigung der Transporttasche 21 so ausgelegt, dass deren Taschenrückwand 24 quer zur Förderrichtung F ausgerichtet ist. Die Transporttaschen 21 werden daher insbesondere in der nachfolgend noch beschriebenen Transferzone TZ und in der Aufnahmezone AZ am verlängerten Rückwandabschnitt 24.1 in eine Ausrichtung parallel zur Förderrichtung F gebogen.

Die Transporttaschen 21 werden gemäss dieser Ausführungsform entlang einer Umlenkung von unten zugefördert und unter Ausbildung einer Schuppenformation in horizontaler Lage unterhalb des Abgabebereichs A in die Transferzone TZ gefördert.

Gemäss beiden Ausführungsformen liegt in der Schuppenformation ein nachlaufender Rückwandteil der Transporttasche 21 einem vorlaufenden Rückwandteil des verlängerten Rückwandabschnittes 24.1 der unmittelbar nachfolgenden Transporttasche 21 auf.

Zwischen den Aufnahmeöffnungen 22 zweier benachbarter Transporttaschen 21 wird nun ein Auffangbereich ausgebildet, wobei der verlängerte Rückwandabschnitt 24.1 eine Auflagefläche für das Stückgut 2 ausbildet.

Die von der Zufördereinrichtung 10 im Abgabebereich A abgegebenen Stückgüter 2 fallen nun schwerkraftbedingt auf die in Schuppenformation unterhalb des Abgabebereichs A vorbei geförderten Transporttaschen 21 bzw. fallen in die von den Transporttaschen 21 in Schuppenformation ausgebildeten Auffangbereiche.

Die Stückgüter 2 fallen insbesondere auf den verlängerten Rückwandabschnitt 24.1 der Transporttaschen 21. Es ist allerdings auch möglich, dass die Stückgüter 2 teilweise oder vollständig auf die Beutelwand 27 einer jeweils vorlaufenden Transporttasche 21 fallen. In diesem Zusammenhang ist es allerdings wichtig, dass ein in eine bestimmte Transporttasche 21 zu beförderndes Stückgut 2 in Förderrichtung F betrachtet nicht vor der Aufnahmeöffnung 22 der vorlaufenden Transporttasche 21 auf die Transporttasche 21 fällt. In einem solchen Fall würde das Stückgut 2 nämlich in die vorlaufende Transporttasche 21 befördert.

Damit die Stückgüter 2 in die richtigen Auffangbereiche fallen und letztendlich in die richtigen Aufnahmefächer 23 der Transporttaschen 21 befördert werden, werden die Zufördereinrichtung 10 und die Hängefördereinrichtung 20, 70 taktsynchron zueinander betrieben.

So weisen beispielsweise die Fächer 13 des Förderbandes 11 dieselbe Länge in Förderrichtung F auf wie die Auffangbereiche der Schuppenformation der Transporttaschen 21. Die Fachlänge bzw. die Länge der Auffangbereiche kann z. B. 500 mm betragen. Dadurch können das Förderband 11 und die Transporttaschen 21 in der Transferzone TZ mit derselben Fördergeschwindigkeit bewegt werden.

Die Hängefördereinrichtung 20, 70 bildet im Anschluss an die Transferzone TZ eine Aufnahmezone AZ aus. Die Transporttaschen 21 werden in der Aufnahmezone AZ immer noch in Schuppenformation gefördert, wobei der verlängerte Rückwandabschnitt 24.1 auch hier eine Auflagefläche für das Stückgut 2 ausbildet. Der Transporttasche 21 und insbesondere der verlängerte Rückwandabschnitt 24.1 ist in der Aufnahmezone AZ allerdings geneigt und bildet zur Aufnahmeöffnung 23 hin ein Gefälle aus.

Das Stückgut 2 rutscht nun in der Aufnahmezone AZ über den verlängerten Rückwandabschnitt 24.1 in das Aufnahmefach 23 der dazugehörigen Transporttasche 21. Liegt das Stückgut 2 auf der Beutelwand 27 der voraus laufenden Transporttasche 21, so rutscht dieses zuerst von der Beutelwand 27 auf den verlängerten Rückwandabschnitt 21 der nachfolgenden Transporttasche 21 und über diesen in das Aufnahmefach 23 der nachlaufenden Transporttasche 21.

Die Transporttaschen 21 werden in ihrer horizontalen bzw. geneigten Lage, welche sie in der Transfer- TZ und Aufnahmezone AZ einnehmen, von unten durch eine Taschenauflage gestützt. Die Taschenauflage wird durch die Förderorgane 30.1, 30.2 selbst ausgebildet. D.h., die Transporttaschen 21 werden jeweils durch die Förderorgane 30.1, 30.2 der nachlaufenden Transporttaschen 21 gestützt bzw. durch deren Befestigungskörper 31.1, 31.2. Hierzu liegen die Transporttaschen 21 mit einem nachlaufenden Taschenabschnitt dem Förderorgan 30.1, 30.2 auf.

Die Transporttaschen 21 mit den Stückgütern 2 in ihren Aufnahmetächern 23 können im Anschluss an die Aufnahmezone AZ hängend weitergefördert werden.

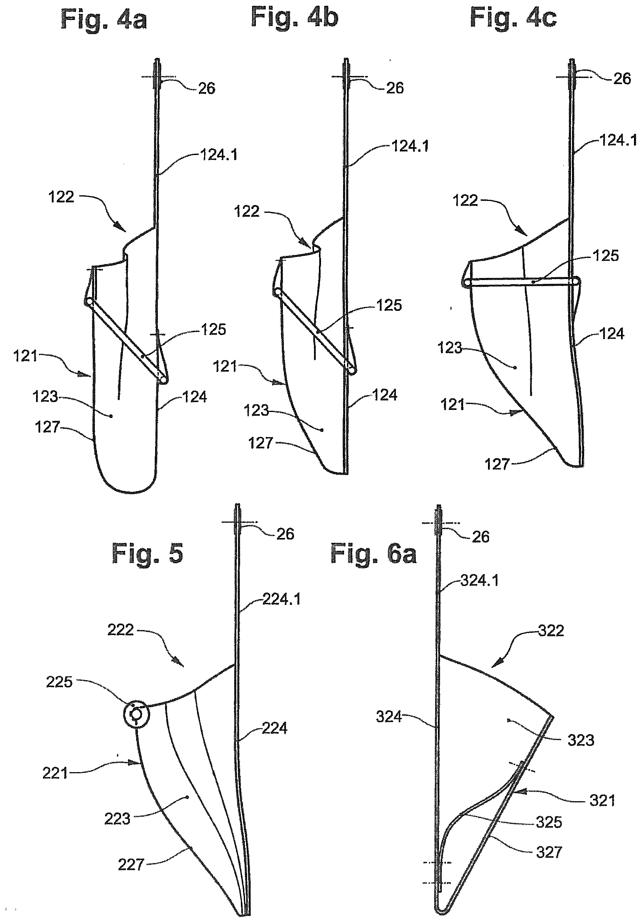

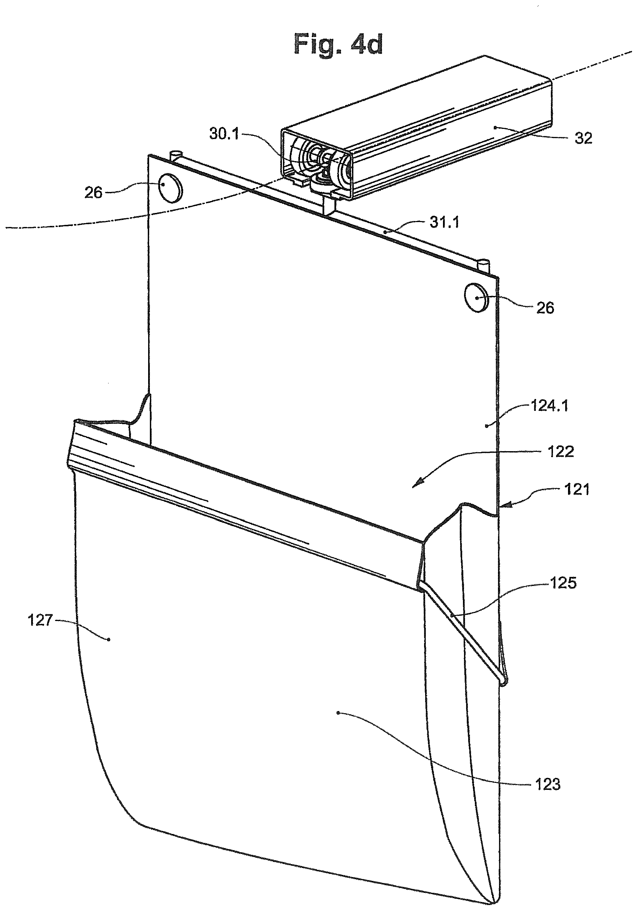

Die Transporttaschen 121, 221, 321, 421, 521 gemäss den Figuren 4a-4d, 5, 6a-6b, 7, 8 und 9 bilden jeweils ein Aufnahmefach 123, 223, 323, 423, 523, 623 zur Aufnahme der Stückgüter 2 aus. Das Aufnahmefach 123, 223, 323, 423, 523, 623 wird zur Rückseite hin durch eine Taschenrückwand 124, 224, 324, 424, 524, 624 und zur Vorderseite hin durch eine Beutelwand 127, 227, 327, 427, 527, 627 begrenzt. Das Aufnahmefach 123, 223, 323, 423, 523, 623 bildet ferner eine Aufnahmeöffnung 122, 222, 322, 422, 522, 622 aus.

Die Transporttasche 121, 221, 321, 421, 521, 621 bildet ferner einen verlängerten Rückwandabschnitt 124.1, 224.1, 324.1, 424.1, 524.1, 624.1 aus. Am freien Endabschnitt des verlängerten Rückwandabschnitts 124.1, 224.1, 324.1, 424.1, 524.1, 624.1 sind Halteösen 126, 226, 326, 426, 526, 626 zum Befestigen der Transporttasche 121, 221, 321, 421, 521, 621 an einem Förderorgan 30.2 angebracht. Das Aufnahmefach 123, 223, 323, 423, 523, 623 ist zur Seite des verlängerten Rückwandabschnitts 124.1, 224.1, 324.1, 424.1, 524.1, 624.1 hin geöffnet.

Die Transporttasche 121 gemäss der Ausführungsvariante nach Figur 4a-4d weist einen Öffnungsbügel 125 auf, welcher die Transporttasche 121 durch sein Eigengewicht sowie durch eine mechanische Fixierung in der Offenstellung offen hält.

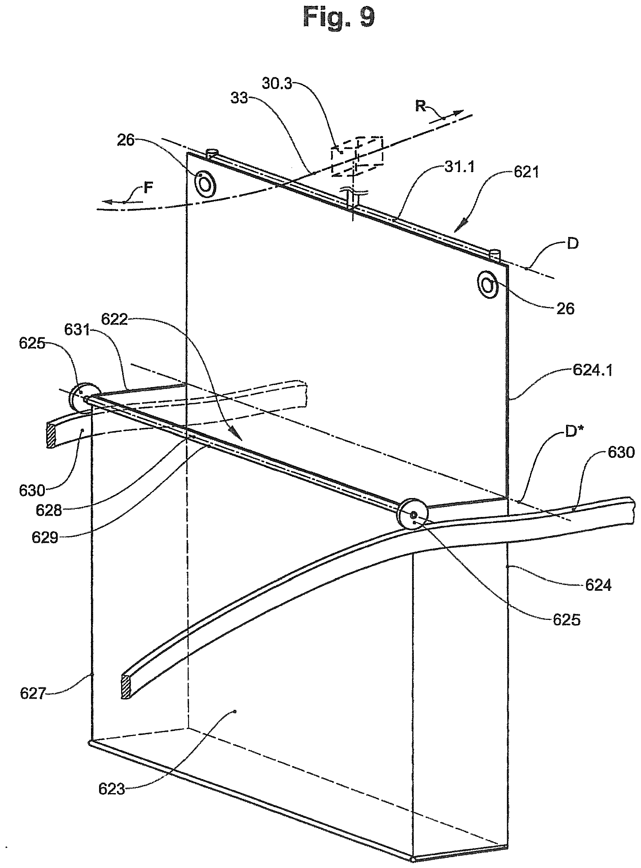

Die Transporttasche 221 gemäss den Ausführungsvarianten nach Figur 5 und 9 weisen im Bereich der Aufnahmeöffnung 222, 622 an der Beutelwand 227, 627 eine Steuerrolle 225, 625 auf, welche mit einer stationären Führungskulisse 630 in der Hängefördereinrichtung (in Figur 5 nicht gezeigt) zusammenwirkt Je Lage der Steuerrolle 225, 625 entlang der Führungskulisse 630 wird das Aufnahmefach 223, 623 in eine Offenstellung oder in eine Kompaktlage bewegt.

Die Transporttasche 321 gemäss der Ausführungsvariante nach Figur 6a-6b enthält im Aufnahmefach 323 ein Federstahlelement 325, welches die Beutelwand 327 aufgrund seiner Rückstellkraft in die Offenstellung drückt. Die Kompaktlage wird durch Anlegen einer Gegenkraft, z. B. mittels eines Auflagedruckes, erreicht.

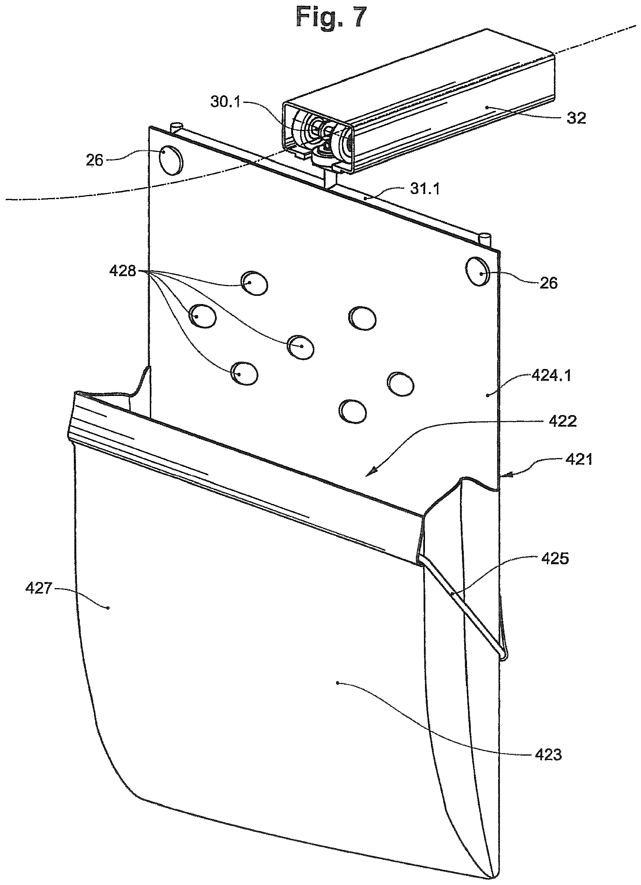

Die Figur 7 zeigt eine Transporttasche 427 gemäss Figur 4a-4d allerdings mit dem Unterschied, dass die Transporttasche 427 im verlängerten Rückwandabschnitt 424.1 ein Lochbild mit einer Mehrzahl von Löchern 428 enthält. Diese dienen der Überprüfung, ob die Stückgüter 2 in der Aufnahmezone AZ tatsächlich in die Aufnahmefächer 423 gerutscht sind.

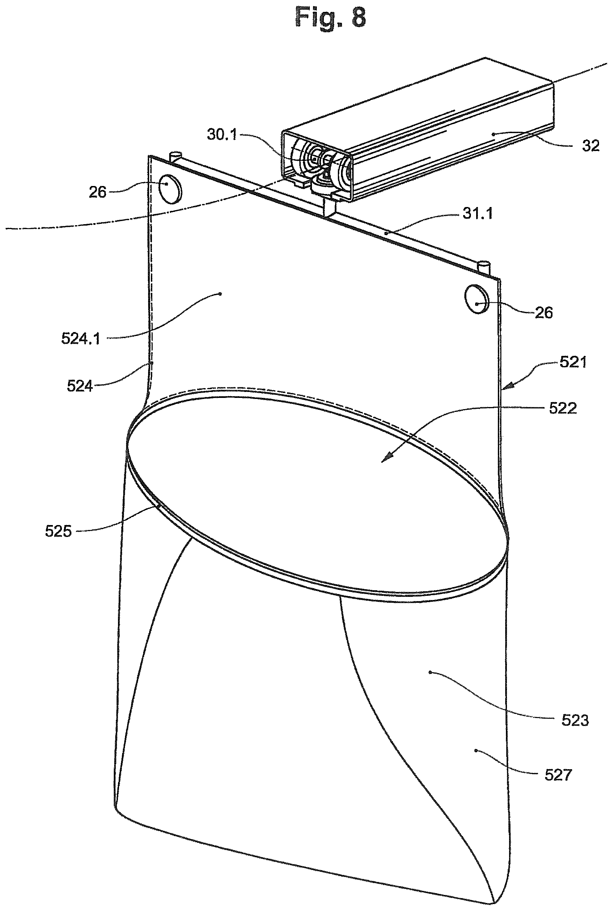

Die Transporttasche 521 gemäss der Ausführungsvariante nach Figur 8 enthält ein die Aufnahmeöffnung 522 einfassendes, streifenförmiges Rückstellelement 525, welches die Aufnahmeöffnung 522 aufgrund seiner Rückstellkraft in die Offenstellung drückt bzw. in der Offenstellung hält. Das Rückstellelement 525 weist federelastische Eigenschaften auf. Das Rückstellelement 525 kann z. B. ein Kunststoffstreifen oder ein Federstahlstreifen sein.

Die Kompaktlage wird durch Anlegen einer Gegenkraft, z. B. mittels eines Auflagedruckes, erreicht.

Die Beutelwand 627 der Transporttasche 621 gemäss der Ausführungsvariante nach Figur 9 umfasst mehrere Taschenwände. So enthält die Beutelwand 627 einen Taschenboden, zwei seitlich angeordnete Taschenwände sowie eine Vorderwand, welche der Taschenrückwand 624 gegenüber liegt.

Die Transporttasche 621 umfasst im Weiteren zwei quer zur Förderrichtung F, R voneinander beabstandete Steuerrollen 625, welche an der Beutelwand 627 angeordnet sind. Die Steuerrollen 625 sind über eine Verbindungsstange 628 miteinander verbunden und an deren freien Enden drehbar gelagert. Die Verbindungsstange 628 ist durch eine an der Beutelwand im Bereich der Aufnahmeöffnung 622 angeordneten Aufnahmeschlaufe 629 geführt. Die Verbindungsstange 628 dient neben der Halterung der Steuerrollen 625 auch dem Aufspannen der Beutelwand 627.

Die Verbindungsstange 628 und die dazugehörige Aufnahmeschlaufe 629 bilden einen Abschnitt des Randabschlusses 631 der Aufnahmeöffnung 622 aus.

Grundsätzlich kann die Ausführungsvariante nach Figur 5 die oben beschriebenen Merkmale ebenfalls aufweisen.

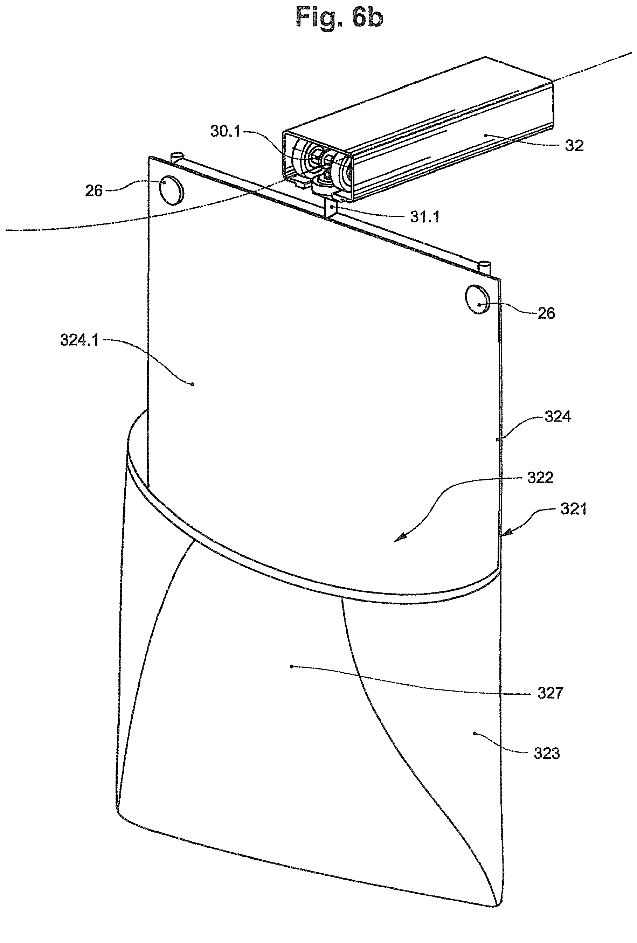

Sowohl die Ausführungsvariante nach Figur 6 als auch nach Figur 5 enthalten im verlängerten Rückwandabschnitt Halteösen 26 zum Anbringen eines Befestigungskörpers 31.1 (nur in Figur 6 gezeigt) zwecks Herstellung einer Verbindung mit einem Förderorgan 30.3, welches z. B. ein Laufwagen sein kann.

Die Führungskulissen 630 bilden Abrollflächen für die Steuerrollen 625 aus, entlang welchen die Steuerrollen 625 zum Öffnen der Transporttasche 621 abrollen. Die Steuerrollen 625 werden dabei durch die Führungskulissen 630 zwangsgeführt. Diese Zwangsführung ist so ausgelegt, dass diese eine Positions¬änderung der Steuerrollen 625 und entsprechend der Beutelwand 627 relativ zur Taschenrück-wand 624 und dadurch ein Öffnen der Transport¬tasche 621 bewirkt. Die Positionsänderung umfasst im vorliegenden Ausführungsbeispiel ein Anheben der Steuerrollen 625 relativ zur Taschenrückwand 624.

Beim Anheben der Steuerrollen 625 schwenken diese zusammen mit der Verbindungsstange 628 um eine in der Taschenrückwand 624 angeordnete, geometrische Schwenkachse D*.

Die Kulissenführung kann ferner so ausgelegt sein, dass die Steuerrollen 625, insbesondere im Anschluss an das Anheben der Steuerrollen 625, zusammen mit der Verbindungsstange 628, der Beutelwand 627 und der Taschenrückwand 624, insbesondere zusammen mit der Transporttasche 621, um eine Schwenkachse D relativ zum Förderorgan 30.3 schwenken.

Die Transporttasche 621 kann im Übrigen gemäss vorliegendem Ausführungsbeispiel entlang einer Förderbahn 33 sowohl in eine erste Förderrichtung F als auch in eine der ersten Förderrichtung F entgegen gerichteten zweiten Förderrichtung R gefördert werden.

Die in den vorliegenden Figuren gezeigten Transporttaschen sind lediglich beispielhaft. Andere Gestaltungsvarianten von Transporttaschen, z. B. solche ohne verlängerten Rückwandabschnitt, sind ebenfalls möglich.

## Patentansprüche

1. Hängefördereinrichtung (1) für die hängende Förderung von Transportgütern, enthaltend eine Mehrzahl von als Einzelwagen ausgebildeten Laufwagen (30) zur individuellen Förderung von Transporttaschen (221, 621), wobei die Laufwagen (30) über Laufrollen entlang mindestens einer Führungsschiene (32), welche eine Förderbahn vorgibt, in einer Förderrichtung (F, R) rollend geführt sind, und an den Laufwagen (30) jeweils eine Transporttasche (221, 621) für den hängenden Transport eines Transportgutes (2) entlang der Förderrichtung (F, R) angeordnet ist, welche eine Taschenrückwand (224, 624) und eine Beutelwand (227, 627) enthält, welche zusammen mit der Taschenrückwand (224, 624) ein Aufnahmefach (223, 623) für das Transportgut (2) ausbildet, und das Aufnahmefach (223, 623) eine Aufnahmeöffnung (222, 622) für das Transportgut (2) ausbildet und derart ausgebildet ist, dass dieses eine Offenstellung und eine platzsparende Kompaktlage einnehmen kann, ferner enthaltend ein Befestigungsmittel (26) zum Verbinden der Transporttasche (221, 621) mit dem Laufwagen (30), sowie enthaltend mindestens ein Steuerelement (225, 625), welches mit einem als Steuerkulisse (630) ausgebildeten Aktivierungsmittel der Hängefördereinrichtung (20) zusammenwirken kann, und über welche das Aufnahmefach (223, 623) in die Offenstellung bewegt oder in dieser gehalten werden kann, **dadurch gekennzeichnet, dass** die Aufnahmeöffnung (222, 622) rahmenlos ausgebildet ist, und das mindestens eine Steuerelement (225, 625) an der Beutelwand (227, 627) der Transporttasche (221, 621) angeordnet ist, wobei die Transporttasche (221, 621) mit vorlaufender Beutelwand (227, 627) in Förderrichtung gefördert wird.

2. Hängefördereinrichtung nach Anspruch 1, **dadurch gekennzeichnet, dass** das Aufnahmefach (223, 623) über das mindestens eine Steuerelement (225, 625) entgegen der Schwerkraft in die Offenstellung bewegt oder in dieser gehalten werden kann.

3. Hängefördereinrichtung nach Anspruch 1 oder 2, **dadurch gekennzeichnet, dass** das mindestens eine Steuerelement (225, 625) eine Steuerrolle ist.

4. Hängefördereinrichtung nach einem der Ansprüche 1 bis 3, **dadurch gekennzeichnet, dass** die Transporttasche (221, 621) in ihrer Offenstellung einen über die Aufnahmeöffnung (222, 622) hinaus verlängerten Rückwandabschnitt (224.1, 624.1) ausbildet.

5. Hängefördereinrichtung nach einem der Ansprüche 1 bis 4, **dadurch gekennzeichnet, dass** die Transporttasche (221, 621) zwei in Förderrichtung (F, R) insbesondere seitlich von der Transporttasche (221, 621) angeordnete Steuerelemente (225, 625) enthält.

6. Hängefördereinrichtung nach Anspruch 5, **dadurch gekennzeichnet, dass** die Steuerelemente (225, 625) über ein Verbindungselement (628) miteinander verbunden sind.

7. Hängefördereinrichtung nach Anspruch 6, **dadurch gekennzeichnet, dass** das Verbindungselement (628) eines der folgenden Elemente ist:
eine Verbindungsstange;
ein offener Bügel;
ein geschlossener Bügel.

8. Hängefördereinrichtung nach einem der Ansprüche 1 bis 7, **dadurch gekennzeichnet, dass** die Transporttasche (221, 621) rahmenlos ausgebildet ist.

9. Hängefördereinrichtung nach einem der Ansprüche 1 bis 8, **dadurch gekennzeichnet, dass** das mindestens eine Steuerelement (225, 625) ausschliesslich über die Beutelwand (227, 627) mit der Taschenrückwand (224, 624) verbunden ist.

10. Hängefördereinrichtung (1) nach einem der Ansprüche 1 bis 9, **dadurch gekennzeichnet, dass** die Steuerkulisse (630) derart mit dem mindestens einen Steuerelement (225, 625) zusammenwirken kann, dass die Steuerkulisse (630) eine Positionsänderung des mindestens einen Steuerelements (225, 625) und entsprechend der Beutelwand (227, 627) relativ zur Taschenrückwand (224, 624) bewirkt, welches zu einem Öffnen der Transporttasche (221, 621) führt.

11. Verfahren zum Öffnen von Transporttaschen (221, 621) in einer Hängefördereinrichtung (1) nach einem der Ansprüche 1 bis 10, welche entlang der Förderschiene (32) der Hängefördereinrichtung (1) gefördert werden, **gekennzeichnet durch** folgende Schritte:
- individuelles Fördern der Transporttaschen (21) in eine Öffnungszone der Hängefördereinrichtung (1);
- Zusammenwirken der mindestens einen Steuerkulisse (630) mit dem mindestens einen Steuerelement (225, 625) der Transporttasche (221, 621) und dadurch
- Ausführen einer Positionsänderung des mindestens einen Steuerelements (225, 625) und entsprechend der Beutelwand (227, 627) relativ zur Taschenrückwand (224, 624), und dadurch
- Öffnen der Transporttasche (221, 621).

12. Verfahren nach Anspruch 11, **dadurch gekennzeichnet, dass** die Transporttasche (221, 621) mit:
vorlaufender Beutelwand (227, 627) in Förderrichtung (F) gefördert wird.

13. Verfahren nach einem der Ansprüche 11 bis 12, **dadurch gekennzeichnet, dass** die Positionsänderung des mindestens einen Steuerelements (225, 625) relativ zur Taschenrückwand (224, 624) eine Schwenkbewegung um eine an der Transporttasche (221, 621) und insbesondere an der Taschenrückwand (224, 624) angeordnete, geometrische Schwenkachse (D*) umfasst.

14. Verfahren nach einem der Ansprüche 11 bis 12, **dadurch gekennzeichnet, dass** die durch das Zusammenwirken der mindestens einen Steuerkulisse (630) mit dem mindestens einen Steuerelement (225, 625) ausgelöste Positionsänderung eine Bewegungsbahn beschreibt, welche nicht kreisbogenförmig ist.

15. Verfahren nach einem der Ansprüche 11 bis 14, **dadurch gekennzeichnet, dass** das Zusammenwirken der mindestens einen Steuerkulisse (630) mit dem mindestens einen Steuerelement (225, 625) der Transporttasche (221, 621) eine weitere Positionsänderung des mindestens einen Steuerelements (225, 625) zusammen mit der Beutelwand (227, 627) und der Taschenrückwand (224, 624) relativ zum Förderorgan (30) bewirkt.

## Claims

1. A suspended conveying device (1) for the suspended conveying of transport items, comprising a plurality of carriages (30) which are designed as individual carriages for the individual conveying of transport pockets (221, 621), wherein the carriages (30) are rollingly guided in a conveying direction (F, R) along at least one guide rail (32), which defines the conveying path, via runner rollers, wherein on the carriages (30) in each case a transport pocket (221, 621) for the suspended transport of a transport item (2) along the conveying direction (F, R) is arranged, wherein the transport pocket (221, 621) comprises a pocket rear wall (224, 624) and a pouch wall (227, 627) which together with the pocket rear wall (224, 624) forms a receiving compartment (223, 623) for the transport item (2), and the receiving compartment (223, 623) forms a receiving opening (22, 622) for the transport item (2) and is designed in a manner such that this can assume an open position and a space-saving compact position, further comprising a fastening means (26) for connecting the transport pocket (221, 621) to the carriage (30), as well as comprising at least one cam element (225, 625) which can interact with an activation means of the suspended conveying device (20) which is designed as a cam guide (630), and via which cam guide the receiving compartment (223, 623) can be moved into the open position or be held in this,
**characterised in that**
the receiving opening (222, 622) is designed in a frameless manner and the at least one cam element (225, 625) is arranged on the pouch wall (227, 627) of the transport pocket (221, 621), wherein the transport pocket (221, 621) is conveyed with leading pouch wall (227, 627) in the conveying direction (F, R).

2. A suspended conveying device according to claim 1, **characterised in that** the receiving compartment (223, 623) can be moved into the open position or be held in the open position, counter to gravitation force, via the at least one cam element (225, 625).

3. A suspended conveying device according to claim 1 or 2, **characterised in that** the at least one cam element (225, 625) is a cam roller.

4. A suspended conveying device according to one of the claims 1 to 3, **characterised in that** the transport pocket (221, 621) in its open position forms a rear wall section (224.1, 624.1) which is extended beyond the receiving opening (222, 622).

5. A suspended conveying device according to one of the claims 1 to 4, **characterised in that** the transport pocket (221, 621) comprises two cam elements (225, 625) which in particular are arranged laterally of the transport pocket (221, 621) considered in the conveying direction (F, R).

6. A suspended conveying device according to claim 5, **characterised in that** the cam elements (225, 625) are connected to one another via a connecting element (628).

7. A suspended conveying device according to claim 6, **characterised in that** the connecting element (628) is one of the following elements:
a connecting rod;
an open bow;
a closed bow.

8. A suspended conveying device according to one of the claims 1 to 7, **characterised in that** the transport pocket (221, 621) is designed in a frameless manner.

9. A suspended conveying device according to one of the claims 1 to 8, **characterised in that** the at least one cam element (225, 625) is connected to the pocket rear wall (224, 624) exclusively via the pouch wall (227, 627).

10. A suspended conveying device (1) according to one of the claims 1 to 9, **characterised in that** the cam guide (630) can interact with the at least one cam element (225, 625) in a manner such that the cam guide (630) effects a position change of the at least one cam element (225, 625) and accordingly of the pouch wall (227, 627) relative to the pocket rear wall (224, 624), which leads to an opening of the transport pocket (221, 621).

11. A method for opening transport pockets (221, 621) in a suspended conveying device (1) according to one of the claims 1 to 10, which are conveyed along the guide rail (32) of the suspended conveying device (1), **characterised by** the following steps:
- the individual conveying of the transport pockets (221, 621) into an opening zone of the suspended conveying device (1);
- the interaction of the at least one cam guide (630) with the at least one cam element (225, 625) of the transport pocket (221, 621) and by way of this
- carrying out a positional change of the at least one cam element (225, 625) and accordingly of the pouch wall (227, 627) relative to the pocket rear wall (224, 624), and by way of this
- opening the transport pocket (221, 621).

12. A method according to claim 11, **characterised in that** the transport pocket (221, 621) is conveyed with the leading pouch wall (227, 627) in the conveying direction (F).

13. A method according to one of the claims 11 to 12, **characterised in that** the positional change of the at least one cam element (225, 625) relative to the pocket rear wall (224, 624) includes a pivoting movement about a geometric pivot axis (D*) which is arranged on the transport pocket (221, 621) and in particular on the pocket rear wall (224, 624).

14. A method according to one of the claims 11 to 12, **characterised in that** the positional change which is activated by the interaction of the at least one cam guide (630) with the at least one cam element (225, 625) describes movement path which does not have the shape of a circular arc.

15. A method according to one of the claims 11 to 14, **characterised in that** the interaction of the at least one cam guide (630) with the at least one cam element (225, 625) of the transport pocket (221, 621) effects a further positional change of the at least one cam element (225, 625) together with the pouch wall (227, 627) and the pocket rear wall (224, 624) relative to the carriage (30).

## Revendications

1. Dispositif de convoyage suspendu (1) pour le convoyage suspendu de marchandises à transporter, comprenant une pluralité de chariots mobiles (30) réalisés sous la forme de chariots individuels destinés au convoyage individuel de sacoches de transport (221, 621), les chariots mobiles (30) étant guidés en roulement dans une direction de convoyage (F, R) par le biais de galets de roulement le long d'au moins un rail de guidage (32), lequel prédéfinit une trajectoire de convoyage, et une sacoche de transport (221, 621) pour le convoyage suspendu d'une marchandise à transporter (2) le long d'une direction de convoyage (F, R) étant respectivement disposée sur les chariots mobiles (30), laquelle contient une paroi arrière de sacoche (224, 624) et une paroi de sac (227, 627) qui, conjointement avec la paroi arrière de sacoche (224, 624), forme un compartiment d'accueil (223, 623) pour la marchandise à transporter (2), et le compartiment d'accueil (223, 623) forme une ouverture d'accueil (222, 622) pour la marchandise à transporter (2) et est configurée de telle sorte que celle-ci peut adopter une position ouverte et une position compacte peu encombrante, comprenant en outre un moyen de fixation (26) destiné à lier la sacoche de transport (221, 621) au chariot mobile (30), et comprenant aussi au moins un élément de commande (225, 625), lequel peut coopérer avec un moyen d'activation du dispositif de convoyage suspendu (20) réalisé sous la forme d'une coulisse de commande (630), et par le biais duquel le compartiment d'accueil (223, 623) peut être déplacé dans la position ouverte ou maintenu dans celle-ci,
**caractérisé en ce que**
l'ouverture d'accueil (222, 622) est configurée sans cadre et l'au moins un élément de commande (225, 625) est disposé au niveau de la paroi de sac (227, 627) de la sacoche de transport (221, 621), la sacoche de transport (221, 621) étant convoyée dans la direction de convoyage avec la paroi de sac (227, 627) en avant.

2. Dispositif de convoyage suspendu selon la revendication 1, **caractérisé en ce que** le compartiment d'accueil (223, 623) peut être déplacé dans la position ouverte ou maintenu dans celle-ci par le biais de l'au moins un élément de commande (225, 625) en s'opposant à la gravité.

3. Dispositif de convoyage suspendu selon la revendication 1 ou 2, **caractérisé en ce que** l'au moins un élément de commande (225, 625) est un rouleau de commande.

4. Dispositif de convoyage suspendu selon l'une des revendications 1 à 3, **caractérisé en ce que** la sacoche de transport (221, 621), dans sa position ouverte, forme une portion de paroi arrière (224.1, 624.1) prolongée au-delà de l'ouverture d'accueil (222, 622).

5. Dispositif de convoyage suspendu selon l'une des revendications 1 à 4, **caractérisé en ce que** la sacoche de transport (221, 621) contient deux éléments de commande (225, 625) disposés notamment latéralement à la sacoche de transport (221, 621) dans la direction de convoyage (F, R).

6. Dispositif de convoyage suspendu selon la revendication 5, **caractérisé en ce que** les éléments de commande (225, 625) sont reliés l'un à l'autre par le biais d'un élément de liaison (628).

7. Dispositif de convoyage suspendu selon la revendication 6, **caractérisé en ce que** l'élément de liaison (628) est l'un des éléments suivants :
une tige de liaison ;
un étrier ouvert ;
un étrier fermé.

8. Dispositif de convoyage suspendu selon l'une des revendications 1 à 7, **caractérisé en ce que** la sacoche de transport (221, 621) est configurée sans cadre.

9. Dispositif de convoyage suspendu selon l'une des revendications 1 à 8, **caractérisé en ce que** l'au moins un élément de commande (225, 625) est relié à la paroi arrière de sacoche (224, 624) exclusivement par le biais de la paroi de sac (227, 627).

10. Dispositif de convoyage suspendu (1) selon l'une des revendications 1 à 9, **caractérisé en ce que** la coulisse de commande (630) peut coopérer avec l'au moins un élément de commande (225, 625) de telle sorte que la coulisse de commande (630) provoque un changement de position de l'au moins un élément de commande (225, 625) et, par conséquent, de la paroi de sac (227, 627) par rapport à la paroi arrière de sacoche (224, 624), lequel donne lieu à une ouverture de la sacoche de transport (221, 621).

11. Procédé pour ouvrir des sacoches de transport (221, 621) dans un dispositif de convoyage suspendu (1) selon l'une des revendications 1 à 10, lesquelles sont convoyées le long du rail de convoyage (32) du dispositif de convoyage suspendu (1), **caractérisé par** les étapes suivantes :
- convoyage individuel des sacoches de transport (21) dans une zone d'ouverture du dispositif de convoyage suspendu (1) ;
- coopération de l'au moins une coulisse de commande (630) avec l'au moins un élément de commande (225, 625) de la sacoche de transport (221, 621) et, de ce fait
- exécution d'un changement de position de l'au moins un élément de commande (225, 625) et, par conséquent, de la paroi de sac (227, 627) par rapport à la paroi arrière de sacoche (224, 624) et, de ce fait
- ouverture de la sacoche de transport (221, 621).

12. Procédé selon la revendication 11, **caractérisé en ce que** la sacoche de transport (221, 621) est convoyée dans la direction de convoyage (F) avec la paroi de sac (227, 627) en avant.

13. Procédé selon l'une des revendications 11 à 12, **caractérisé en ce que** le changement de position de l'au moins un élément de commande (225, 625) par rapport à la paroi arrière de sacoche (224, 624) comprend un mouvement de pivotement autour d'un axe de pivotement géométrique (D*) disposé au niveau de la sacoche de transport (221, 621) et notamment au niveau de la paroi arrière de sacoche (224, 624).

14. Procédé selon l'une des revendications 11 à 12, **caractérisé en ce que** le changement de position déclenché par la coopération de l'au moins une coulisse de commande (630) avec l'au moins un élément de commande (225, 625) décrit une trajectoire de mouvement qui n'est pas en forme d'arc de cercle.

15. Procédé selon l'une des revendications 11 à 14, **caractérisé en ce que** la coopération de l'au moins une coulisse de commande (630) avec l'au moins un élément de commande (225, 625) de la sacoche de transport (221, 621) provoque un changement de position supplémentaire de l'au moins un élément de commande (225, 625) conjointement avec la paroi de sac (227, 627) et la paroi arrière de sacoche (224, 624) par rapport à l'organe de convoyage (30).
